# EUROPEAN PATENT SPECIFICATION

(11) **EP 2 830 289 B1**
(45) Date of publication and mention of the grant of the patent: **13.04.2016**
(21) Application number: 14177791.2
(22) Date of filing: 21.07.2014
(51) Int. Cl.: H04L 29/08

(54) **Adaptable reporting in a multi-client telecommunication network**
Anpassbare Berichterstattung in einem Mehrfach-Client-Telekommunikationsnetzwerk
Signalement adaptable dans un réseau de télécommunication multiclient

(30) Priority: 24.07.2013 US 201313949446
(43) Date of publication of application: 28.01.2015
(73) Proprietor: SAP SE, 69190 Walldorf (DE)
(72) Inventor: Valentin, Marco, 69190 Walldorf (DE); Gaertner, Christian, 69190 Walldorf (DE)
(74) Representative: Richardt Patentanwälte PartG mbB

(56) References cited:
- US-A1- 2005 233 767
- US-A1- 2010 324 955
- US-A1- 2012 078 387

## Description

### Field of the invention

This disclosure relates to telecommunication systems and data transmission via a telecommunication network. More particularly, this disclosure relates to reporting approach adaptable to various types of telecommunication devices.

### Background and related art

Telecommunication networks, e.g. mobile telecommunication networks, today may consist of a plurality of different telecommunication devices of different device types. For example, a telecommunication network may comprise desktop computers, servers, notebooks, tabloid computers and smartphones ranging in size between the palm of a hand and a small tabloid computer. Using multiple telecommunication devices of different device types and corresponding display sizes allows a user in many different situations (at work on a company's site or at an external meeting, at home, when being conveyed by public transport etc) to stay in contact with colleagues or friends and/or to access office software or manufacturing control software provided e.g. by a telecommunication server owned by the employer or a service provider.

However, the diversity of telecommunication devices in use today has the drawback that reports communicated from a telecommunication server to a client device may comprise too much data for displaying said data on a small sized client device. Reports comprising only the minimum amount of detail will waste available display space when displayed on a screen of a larger telecommunication device.

Document US 2005/233767 published on 20-10-2005 discloses a method for interfacing a mobile device to a wireless mobile configurator and/or an enterprise's network platform or backend.

### Summary

It is an objective of the present invention to provide for an improved telecommunication system and method for reporting as specified in the independent claims. Embodiments of the invention are given in the dependent claims. Embodiments of the present invention can be freely combined with each other if they are not mutually exclusive.

A 'report' as used herein is a data object used as a container for receiving information that shall be displayed on a screen. A report may comprise first executable program logic for retrieving data identified by one or more selection criteria, and second executable program logic for generating a graphical representation of the report comprising the retrieved data. The information to be displayed may relate to a physical object or on a group of physical objects. Said physical object or said group of physical objects may be, for example, a machine and its components, an automated assembly line, a power plant, a company or the like. The information may comprise some property values of said physical object or group of objects (e.g. the temperature, fuel consumption, working state of a machine, etc.).

A 'client device' or 'client telecommunication device' as used herein is a telecommunication device that is digital, computer networked, preferentially user reconfigurable and that can exchange data with other telecommunication devices, e.g. other client devices and/or a reporting server, via a telecommunication network.

A 'reporting telecommunication server' as used herein is a telecommunication device that comprises a processor and a memory and is configured to provide, in response to a request of a client device, a response to said client device via the telecommunication network in the form of a report or a graphical representation of the report's data content. Preferentially, the reporting telecommunication server comprises sufficient CPUs and memory for processing requests from multiple client devices in parallel.

A 'telecommunication network' as used herein is a data communication network such as, for example, the internet or an Intranet. In particular, the telecommunication network may be a wireless network, e.g. a mobile communication network, also known as 'cellular network' distributed over land areas called cells, each served by at least one fixed-location transceiver, known as a cell site or base station. A 'telecommunication server' as used herein is a telecommunication device, e.g. a computer, dedicated to providing some specific service for other telecommunication devices on the network. A 'reporting telecommunication server' may provide a reporting service over the network.

An 'aggregated data object' is a data set that comprises aggregated information relating to one or more physical objects or groups of objects. Aggregated information is information having been derived by applying an aggregating function on some input data. An aggregating function may be, for example, a calculation of a sum, a product, a mean value, a median value or the like. The aggregated data object may be implemented as data object of an object oriented programming language.

A 'selection criterion' as used herein is data, e.g. a property value, which can be used in the context of a database management system to identify and retrieve some data stored in said database. Thereby, said 'selection criterion' allows the selection of the data to be retrieved, i.e., it acts as a kind of identifier for a data structure comprising information that shall be retrieved. The selection criterion may be combined with additional property values for selecting and retrieving specific data from the database. For example, a selection criteria could be 'temperature' and could be used for identifying a particular table having a particular column 'temperature' and for retrieving one or more temperature values stored in said column. If the selection criterion 'temperature' is combined with additional property values, e.g. one or more machine-IDs, a more specific fraction of said data may be retrieved, e.g. the temperature values of the machines having assigned a particular machine-ID. In some embodiments, said additional property values are used as further selection criteria.

The expression 'sending a graphical representation of a report' means that the data content contained in said report, e.g. some aggregated data objects or detailed information related to said objects and also some information how said data objects or detailed information shall be displayed is transmitted to a client device for display. Depending on the implementation, this may be performed e.g. by transferring binary report data objects to the client device, by transferring a HTML page to the client device or the like. The HTML page may comprise, for example, some HTML tags specifying a list or a table that comprises one or more aggregated data objects or detailed information to be displayed.

A 'mapping' as used herein is a data structure, e.g. a data file or a table in a relational database, that assigns at least two pieces of information to each other. In some embodiments, the mapping may be complex and may consist of a combination of multiple complex data structures, e.g. multiple database tables linked to each other via secondary keys.

A 'device type information' is information that allows determining at least the approximate size of a device. The size of a device, in particular of mobile telecommunication devices, also determines the maximum possible size of the display of said device. Depending on the embodiment, the device type information may allow the exact determination of the display size of the client device and/or may allow the determination of the device type of the client device. The "device type" may be the exact device type as specified by the manufacturer or may be a more coarse grained device type category such as "small smart phone", "medium-sized smartphone", "large smartphone", "tabloid", "notebook" or "desktop computer".

In one aspect, the invention relates to a reporting method as in claim 1 for a multi-client telecommunication network. A corresponding system and a non-transitory storage medium are also claimed in claims 14 and 15, respectively.

The network comprises a plurality of client devices and a reporting telecommunication server. The reporting method is implemented by the reporting telecommunication server and comprises:
- receiving a request from one of the client devices;
- generating a first report, the first report being a data object having assigned one or more first selection criteria, and one or more of a plurality of second selection criteria, the first report comprising aggregated data objects retrieved from at least one first database table by using the first selection criteria;
- sending a first graphical representation of the first report with the retrieved aggregated data objects to the one client device via the network for display on a screen of said one client device;
- receiving a user's selection of one of the displayed aggregated data objects via the network;
- accessing a mapping, the mapping assigning each second database table of a plurality of second database tables a sub-set of the plurality of second selection criteria, each second selection criterion enabling the identification and retrieval of data stored in the second database table, said second database table being assigned in said mapping to said second selection criterion;
- retrieving detailed information of the selected aggregated data object by a sub-method a); and
- sending a second graphical representation of a further report comprising said detailed information for display to the client device.

Sub-method a) is implemented by the reporting telecommunication server. Sub-method a), that could also be referred to as 'reporting based on a single, generic second report', comprises:
- identifying, by evaluating the mapping, all second database tables having assigned at least one of the second selection criteria assigned to the first report;
- identifying, by further evaluating the mapping, all second selection criteria contained in any one of the second selection criteria sub-sets assigned to any one of the identified second database tables;
- sending the identified second selection criteria to a second report, the second report being a data object configured to select any information identified by any sent second selection criteria from any one of the second database tables; and
- retrieving information identified by the sent second selection criteria from the identified second database tables;
- supplementing the second report with said retrieved information; and
- using said retrieved information as the detailed information and using said second report as the further report.

Said features may be advantageous, because the data content of all tables that comprise at least one column mapped to one of the second selection criteria of the first report may be retrieved, as a whole or in part. Said retrieved data is retrieved by and presented via a single second generic report. It has been observed that the scope of the whole data content of an individual relational database table comprises, for almost all reporting scenarios tested, the maximum amount of context data (or detailed data) that might be of relevance when data stored in a particular column of said table (identified by a particular second selection criterion) is requested. This observation was surprising, as at design time of a database, the tables are usually normalized for avoiding redundant storage of data. This normalization does not take into account any considerations relating to the presentation layer of a DBMS. Sub-method a) makes use of said observation and sends identifiers (second selection criteria, e.g. the names of all columns of any second table comprising at least one column identified by one of the second selection criteria of the first report) to the generic second report. This generic report may then retrieve data by means of said sent second selection criteria, e.g. by automatically creating SQL select statements comprising said sent selection criteria for retrieving data stored in any table column of any second table identified by said sent selection criteria.

The reporting telecommunication server may generate or manage a plurality of first reports, each having assigned a different set of second selection criteria. Although a plurality of different first reports may exist, only a single type of second report, the generic second report capable of retrieving data from any one of the second tables, may need to be maintained (see example given in the detailed description). This may ease maintenance of the reporting telecommunication server and may help reducing the computational overhead on the side of the reporting telecommunication server as only a single type of second report needs to be instantiated per client device.

In a further beneficial aspect, the generic second report may ensure that all data that could be of relevance for the client are communicated to the client. For example, the second graphical representation of the second report may comprise some filtering GUI elements enabling the user of the client device to display additional data or to hide irrelevant data that has been communicated to the client device as part of the generic second report. This flexibility on the client side may be enabled by using the generic second report that may comprise more detailed information of the selected aggregated data object than actually "needed" by the user of the client device. Thus, the user of the client device may easily adapt the amount of data actually displayed by selecting or deselecting some data via the filtering GUI elements, without invoking additional request-response cycles for retrieving missing context information. This may be particularly advantageous in telecommunication networks when the computational costs (time, CPU consumption) for the request-response cycle(s) are considered as more costly than the computational costs of communicating more data via the network that may actually be required by the client.

In a further aspect, the invention relates to a reporting method for a multi-client telecommunication network. The network comprises a plurality of client devices and a reporting telecommunication server. The reporting method is implemented by the reporting telecommunication server and comprises:
- receiving a request from one of the client devices;
- generating a first report, the first report being a data object having assigned one or more first selection criteria, and one or more of a plurality of second selection criteria, the first report comprising aggregated data objects retrieved from at least one first database table by using the first selection criteria;
- sending a first graphical representation of the first report with the retrieved aggregated data objects to the one client device via the network for display on a screen of said one client device;
- receiving a user's selection of one of the displayed aggregated data objects via the network;
- accessing a mapping, the mapping assigning each second database table of a plurality of second database tables a sub-set of the plurality of second selection criteria, each second selection criterion enabling the identification and retrieval of data stored in the second database table, said second database table being assigned in said mapping to said second selection criterion;
- retrieving detailed information of the selected aggregated data object by a sub-method b); and
- sending a second graphical representation of a further report comprising said detailed information for display to the client device.

Sub-method b) is implemented by the reporting telecommunication server. Sub-method b), that could also be referred to as 'reporting based on one or more of a plurality of special-purpose second reports' comprises:
- providing a plurality of second reports;
- providing a further mapping, the further mapping assigning each one of the second reports to one or more of the plurality of second selection criteria, each second report being configured to select any information identified by the one or more second selection criteria assigned to said second report from one or more of the second database tables;
- evaluating the further mapping for identifying all second reports having assigned at least one of the second selection criteria assigned to the first report;
- sending a list of all identified second reports to the client device;
- receiving the user's selection of one of the second reports of said list;
- identifying, by evaluating the mapping, one or more second database tables having assigned at least one of the second selection criteria assigned to the selected second report;
- retrieving the information identified by the second selection criteria assigned to said selected second report from the identified one or more second database tables; the identification of said information may be performed by evaluating the accessed mapping, e.g. to identify a column of one of the second tables whose name is identical to or matches the name of a second selection criterion;
- supplementing the one second report with said retrieved information; and
- using said retrieved information as the detailed information and using said selected second report as the further report.

Using sub-method b) may be beneficial because the user may be enabled to select a special purpose second report type before said second report is actually filled with data and is communicated via the network to the user. This may help reducing the data traffic via the network and to reduce the time for generating, receiving, rendering and displaying the second report. In addition, the user may not be required to take action to reduce the actually displayed data by some filtering GUI elements on the client side and/or may not be required to scroll in a complex, generic second report that does not fit into the screen size. Avoiding the scrolling on the client side may be advantageous as the client telecommunication device may be a battery powered mobile telecommunication device and avoiding scrolling movements may reduce the processor load and may help increasing the battery lifetime.

According to embodiments, both sub-method a) and sub-method b) are implemented by the reporting telecommunication server. According to some embodiments, the method further comprises the telecommunication server receiving device type information of the one of the client devices. For example, the device type information may be received as part of the request or may be received separately. The telecommunication server executes the retrieving of the detailed information of the selected aggregated data object in dependence on the received device type information.

Said features may be advantageous because a reporting system may be provided that is able to automatically and highly flexibly generate reports that comprise the appropriate amount of data for a variety of different device types. The device-type specific use of the generic second report/sub-method a) may help to ensure that the client device is capable of displaying complex and detailed reports, and that no intermediate step is necessary for prompting a user to select a suitable second report from a plurality of available suitable reports (as is the case in sub-method b). According to sub-method a), a graphical representation of the generated generic second report may immediately and without any further manual interaction of the user be returned to the client device and may be displayed on a screen of the client device. If the received device type indicates that the device is not capable of displaying all data retrieved, using sub-method b) may be more efficient because scrolling and filtering operations on the client device may be avoidable. In addition, in telecommunication networks wherein the transmission of data that might not be needed by the client is computationally more expensive than an additional request-response cycle for selecting one or more of the specialized second reports, method b) may be more efficient. Thus, a combination of sub-methods a) and b) may provide for a highly flexible reporting method that is flexibly adaptable to a variety of display sizes and client devices and to a variety of different telecommunication network types (having a greater computational overhead for communicating (payload) data over a network or having a greater computational overhead for additional request-response cycles.

According to embodiments, when executing sub-method b), the reporting telecommunication server may identify one or more predefined second reports which are mapped to one or more of the second selection criteria of the first report. Thus, the second reports identified and listed according to sub-method b) are predefined and may be mapped to a specific subset of the available second selection criteria. This may allow defining special second reports that comprise specific detailed information and/or context information for any object displayed and selected in the first report.

Preferenfiially, the identified second reports are not automatically filled with their respective data upon being identified. Rather, they are presented to the user via the network in order to allow the user to select the one of the second reports that the user considers as the most relevant one and/or the most appropriate one for the screen size of its respectively used client device. Then, the detailed data is retrieved only for the selected second report.

Thus, a highly flexible reporting system and method may be provided that may allow dynamically identifying and retrieving the maximum possible amount of detail that can be displayed by a given type of client device. Thus, an operator of a machine park may use the large screen of his desktop computer to view reports by means of the generic second report according to sub-method a) and may use his mobile phone to view reports by means of one or more selected second records according to sub-method b) when commuting to work. As either a) or b) is chosen automatically in dependence on the device type, the user is not burdened with manually selecting the appropriate reporting approach.

According to embodiments, at least some of the specific second reports of sub-method b) may be used for selecting and visualizing data for more than one first report which share at least one assigned second selection criterion.

Preferentially, most or all of the second reports respectively have assigned less second selection criteria than the average column number of a second database table. Thus, less data is retrieved by a second report according to sub-method b) than by the generic second report that may be configured to receive data from all columns of all tables comprising at least one column identified by one of the second selection criteria assigned to the first report.

According to embodiments, each second report identified according to sub-method b) comprises an indication of the number of second selection criteria that are used by said second record to identify respective database columns for retrieving the data from the second database tables. Said number is also presented to the user together with the list of the identified second reports. This may be advantageous as the user may be enabled to estimate the amount of data that is retrieved by the respective second report. For example, a second report having assigned 3 second selection criteria may retrieve data from three table columns and may need a table of at least three columns for displaying the retrieved information on the screen of a client device. Thus, the user knows, when selecting one of the available second reports according to sub-method b) how much data will be retrieved and provided for display by said second report upon selection. This may be advantageous, as the sizes of the available client devices vary greatly and also the user's preference how much data should be displayed varies. Also, the information that is retrieved by the individual second reports according to sub-method b) will vary depending on their respectively assigned second selection criteria. Thus, users of "small" telecommunication devices get better control of how much and what kind of information shall be reported and displayed.

According to embodiments, the first report (and optionally one or more further first reports) are generated by a legacy first reporting system and/or by a newly developed reporting system that has already been delivered to and deployed to a customer.

Legacy reporting systems or newly developed reporting systems having already been delivered to a customer cannot be adapted to changed requirements easily. Typically, said reporting tools display some special-purpose reporting-windows that have been developed for displaying a particular kind of data to a user. The kind of data to be displayed by said windows is predefined and remains constant at runtime of the system. Said reporting windows of legacy systems are programmed by a programmer and the kind of data to be displayed by said particular window is hard-coded. In case a customer should want to display some additional data in said window, the customer has to ask a programmer to rewrite and/or reconfigure the window. Thus, the work of a programmer is needed in order to retrieve and display additional data in such a legacy/deployed reporting system. This results in increased costs and a significant delay and thus may in sum result in an inflexible reporting tool.

By providing the set of second selection criteria and the second reports "on top" of said existing first reports of a legacy reporting system and/or of an already deployed reporting system, a highly flexible reporting system for a plurality of telecommunication clients can be provided without reprogramming the legacy system and without reprogramming and/or redeploying the already deployed reporting system.

According to embodiments, the one or more first reports and the second reports of sub-methods a) and b) form a 'report-to-report' reporting system. A 'report-to-report' reporting system is a system comprising one or more first reports and one or more second reports wherein the information displayed in a second report depends on information presented by and/or selected from one of the first reports. According to embodiments, the technical infrastructure used for generating and/or executing the first report(s) is technically and organizationally separated (or separable without any reconfiguration) from the technical infrastructure used for generating and/or executing the second report(s). For example, the system generating the first report(s) may be a legacy report generation tool that cannot or shall not be modified by an operator of the reporting tool that generates the second reports. The system generating the first report may be inaccessible by an operator of the system that generates the second reports for security reasons. Thus, the system or module that generates the first report or the first reports may have to be considered as unalterably and invariable, for technical or other reasons.

According to embodiments, some or all of the second selection criteria assigned to the first report are received by the reporting server as user data entered by a user via a user interface, e.g. a graphical user interface (GUI). The entered second selection criteria may be used for automatically generating the database queries. For example, a user may enter one or more selection criteria. The reporting server may determine if a column of a second database table exists whose name matches one of the entered second selection criteria. In case such a column does not exist, the entered selection criterion may be ignored and may not be used for creating the database query. It may also happen that the generated database query comprises additional selection criteria that are not entered by the user. Said additional selection criteria may relate to columns or other database features that are not even known to the user but may facilitate accelerated or more specific data retrieval.

According to embodiments the at least one first database table belongs to a first database and the second database tables belong to a second database. The second database is separate from the first database. This may imply that the first and second databases are hosted on different database servers and/or operated by different organizations or persons. The first database may be part of a legacy system or an already deployed reporting system while the second database may be part of a "report-to-report" system wherein the second reports are provided in addition to the first reports and act as adaptors for communicating details of the aggregated data objects of the first reports to a plurality of different client devices. Report-to-report functionality may be used to connect reports within a system. This functionality requires custom second reports to make sure that they "fit together" in their definition, selection criteria and database tables.

According to embodiments, the reporting telecommunication server determines if the received device type information indicates that the display size of the client device having sent the request is below a threshold size. If the display size is below the threshold, the reporting telecommunication server performs the execution of the sub-method b); otherwise, the reporting telecommunication server performs the execution of the sub-method a).
This may be advantageous as the report may be retrieved and displayed immediately in case the size of the client device is sufficiently high. Otherwise, the user is enabled to inspect a plurality of available specialized second reports suited to retrieve and display detailed data on some specific aspects of the selected aggregated data object of the first report. This may be advantageous as the size of the report can be automatically adapted to different screen sizes of smartphones, tabloid computers and immobile personal computers.

According to embodiments the telecommunication server executes the retrieving of the detailed information of the selected aggregated data object in dependence on the received device type information and in dependence on received telecommunication network settings. A 'telecommunication network setting' as used herein is data that is indicative of whether the computational costs of communicating a defined amount of data via a network connection of a telecommunication network is considered as computationally more expensive or less efficient than an additional request-response cycle via said network connection. The telecommunication network setting can be implemented, for example, as a parameter of type BOOLEAN like "AVOID-ADDITIONAL-REQEST-RESPONSE-CYCLES=FALSE". The setting may be specified manually, e.g. by an operator of the telecommunication server, or manually. The telecommunication network settings may be received by the telecommunication server as part of the request of the client device or may be received separately. It may also be read from a configuration file. Said features may be advantageous because a reporting system may be provided that is able to automatically and highly flexibly generate reports that comprise the appropriate amount of data for a variety of different types of telecommunication networks.

According to embodiments, the reporting telecommunication server determines if the telecommunication network settings indicate that request-response-cycles should be avoided. If so, the reporting telecommunication server performs the execution of the sub-method a); otherwise, the reporting telecommunication server performs the execution of the sub-method b). This may be advantageous as the method may flexibly be adapted to different types of telecommunication networks and use case scenarios.

According to embodiments at least one of the second selection criteria is an identifier for a respective column of one of the second database tables being assigned to said at least one second selection criterion in the mapping. For example, the at least one second selection criterion may be an alphanumerical character string being equal to the name of a corresponding column, wherein the column name is unique within the second database. Alternatively, the at least one second selection criterion may be an alphanumerical string comprising a combination of the column name and the name of the second table comprising said column. As table names have to be unique within a database, also said combination would provide for a unique identifier of a database column comprising relevant detail information for display in a second report. More complex specifications and mappings of second selection criteria and column names are also possible. The first selection criteria may analogously be alphanumerical strings for identifying first database tables and columns in a first database. In some examples, one or more of the second selection criteria do not identify particular columns but act as reference values for comparing data content of a database cell with said reference value. The data content of said cell is retrieved if it fulfills a comparison function in respect to said reference value. For example, the data content may be retrieved if it is equal to, is larger than or smaller than the reference value.

According to embodiments at least each of the columns is identified by any one of the second selection criteria of the plurality of second selection criteria comprises an index that is used for selecting the information contained in said column. Said feature may be advantageous as it ensures that in case a particular column is dynamically identified, e.g. by means of a second selection criterion sent to the generic second report, for searching some detail information to a particular object, e.g. a machine, the database searching can be performed on an index and thus highly efficiently.

According to embodiments the sent first graphical representation comprises first customizing GUI elements, the first customizing GUI elements enabling a user to modify the assignment of the second selection criteria to the first report, the modification including the assignment of additional second selection criteria that are contained in the mapping and currently being unassigned to said first report. Said features may be beneficial as a user is enabled to add additional second selection criteria to a currently used first report, thereby modifying the set of second selection criteria sent to the generic second report or the number and kind of specific second reports identified and presented to the user for selection. This may be advantageous as it further increases the flexibility of the reporting system. The user may also remove one or more assignments of one or more second selection criteria from the currently used and displayed first report, thereby reducing the number of second selection criteria sent to the generic report and/or reducing the second reports identified in accordance with sub-method b).

According to embodiments all columns of all tables of a database management system that comprises the second database tables respectively comprise an index. Said index is used for selecting the information contained in said column. This may be beneficial as it is ensured that whatever kind of second selection criteria is assigned to or sent to a second report, an index will be used when retrieving the data identified by said second selection criteria. Thus, unexpected and long delay times when generating and displaying a second report can be avoided.

Said feature set may be particularly advantageous when used in combination with a second database wherein all columns of all second tables comprise an index. The mapping may assign each existing column of one of said second tables to a respective second selection criterion. Thus, the user has full configuration flexibility in respect to the kind and number of second selection criteria assigned to the first report. As every column comprises an index, it is ensured that the user cannot assign any second selection criterion that would delay the reporting due to select statements operating on an un-indexed column.

According to embodiments an application program implements the reporting method of any one of the previous embodiments. The second database tables are managed by a database management system. At deployment time of the application program, the reporting telecommunication server provides the mapping. The mapping comprises, for each column and for each table contained in said database management system, a second selection criterion adapted to identify said column.

According to embodiments the reporting method further comprises automatically creating, upon execution of program logic contained in the second report, database operations to join the multiple second database tables for retrieving the detailed information. Said database operations comprise the second selection criteria. For example, the database operations may be SQL SELEC queries that may comprise some table joins. The database operations may be generated automatically. The database operations may comprise and use the second selection criteria for identifying the columns and tables from which the data shall be selected.

According to embodiments the reporting method further comprises:
- the reporting telecommunication server evaluating the mapping and the second selection criteria currently assigned to the first report for identifying the second selection criteria being contained in the mapping and currently being unassigned to said first report;
- sending a graphical representation of said identified second selection criteria for display to the client device;
- the reporting telecommunication server receiving the user's selection of one or more of said displayed second selection criteria;
- the reporting telecommunication server assigning said user selected second selection criteria to the first report; and
- automatically repeating the reporting method in accordance with of any one of the above embodiments.

According to embodiments all second database tables are contained in a second database. The reporting method further comprises automatically identifying all columns of all second database tables contained in said second database being identified by one of the plurality of second selection criteria and lacking an index; and automatically creating an index for each of the identified columns. This may be advantageous as existing database systems whose index structure might not be optimal for the above described reporting system can easily and fully automatically transformed in a database system that ensures that no delay can be caused by a column corresponding to a second selection criterion and lacking an index.

According to embodiments each one of the sub-sets of second selection criteria comprises multiple second selection criteria.

According to embodiments the first report has assigned multiple second selection criteria. Identifying of the one or more second database tables comprises identifying multiple second database tables.

In a further aspect the invention relates to a telecommunication system comprising a reporting telecommunication server connected via a network to multiple client devices. The reporting telecommunication server comprises memory and a computer processor coupled to the memory. The he reporting telecommunication server further comprises instructions stored in the memory that are executable by the processor. When executed by the processor, the instructions cause the processor to execute the reporting method according to any one of the above embodiments. According to some embodiments, the telecommunication server implements only sub-method a), or only sub-method b) or a combination thereof. The question if sub-method a) or b) may be executed may be determined as described for any of the above mentioned embodiments.

In a further aspect, the invention relates to a non-transitory storage medium comprising instructions which, when executed by a processor cause the processor to execute the steps of any one of the above embodiments.

In a further aspect, the invention relates to a method comprising: Receiving, using a processor of a machine, a selection of information from a report generated from a first data table and displayed on a display device of the machine; identifying an additional data table where information related to the selection resides; creating a selection criteria based on the additional data table; sending the selection criteria to a generic report, the generic report adapted to select any information from any data table; and selecting information based on the selection criteria.
According to embodiments, the method further comprises displaying the selected information in a second report. The additional data table may reside in a database separate from the first data table. The selection may comprise a plurality of information and the identifying operation may identify multiple additional data tables.

In a further aspect the invention relates to a system comprising: memory; a computer processor coupled to the memory; instructions stored in the memory and executable by the processor. The instructions comprise: a sender report, also referred herein as 'first report', to display information and to receive a selection of the displayed information; a sender adaptor, also referred herein as 'first report adaptor', to receive the selection from the sender report, and to extract a report-to-report selection criteria, also referred to as 'second criteria' from the selection; a receiver adaptor, also referred herein as 'second report adapter', to obtain the report-to-report selection criteria, to identify a target data table where information resides relating to the report-to-report selection criteria, and to create a selection criteria for the data table from the report-to-report selection criteria; and a receiver report, also referred herein as generic 'second report' to receive the selection criteria for the data table and to execute the selection criteria for the data table. The instructions may further comprise a report-to-report adaptor to receive the report-to-report selection criteria and to provide the report-to-report selection criteria to the receiver adaptor. The report-to-report adaptor may further be configured to store the report-to-report selection criteria. The receiver adaptor is further configured to identify multiple target data tables where information relating to the report-to-report selection criteria resides; and to create database operations to join the multiple target data tables. The selection criteria may operate on joined multiple target data tables. The sender report may further be configured to extract displayed information from a sender data table and wherein the sender data table and the target data table reside in different databases. The selection may comprise multiple displayed information. The report-to-report selection criteria include criteria for the multiple displayed information.

### Brief description of the drawings

In the following embodiments of the invention are explained in greater detail, by way of example only, making reference to the drawings in which:
- FIG. 1: is a diagram illustrating a reporting system for a manufacturing process;
- FIG. 2: is a representative flow diagram to provide a generic second report;
- FIG. 3: is a diagram illustrating a representative architecture to provide a report;
- FIG. 4: is a diagram illustrating information selection from a first report;
- FIG. 5: illustrates use of an in-memory database in a reporting system;
- FIG. 6: is a block diagram of a computer processing system, within which a set of instructions for causing the computer to perform any one or more of the methodologies discussed herein may be executed;
- FIG. 7: shows first and second database tables, a first report and a mapping of second selection criteria and columns of the second database tables; and
- FIG. 8: a 'generic' second report, two 'special purpose' second reports and a further mapping that assigns second selection criteria to 'special purpose' second reports; and
- FIG. 9: a reporting telecommunication server connected to multiple client devices.

### Detailed description

The description that follows includes illustrative systems, methods, techniques, instruction sequences, and computing machine program products of illustrative embodiments. In the following description, for purposes of explanation, numerous specific details are set forth in order to provide an understanding of various embodiments of the inventive subject matter. It will be evident, however, to those skilled in the art, that embodiments of the inventive subject matter may be practiced without these specific details. In general, well-known instruction instances, protocols, structures, and techniques have not been shown in detail.

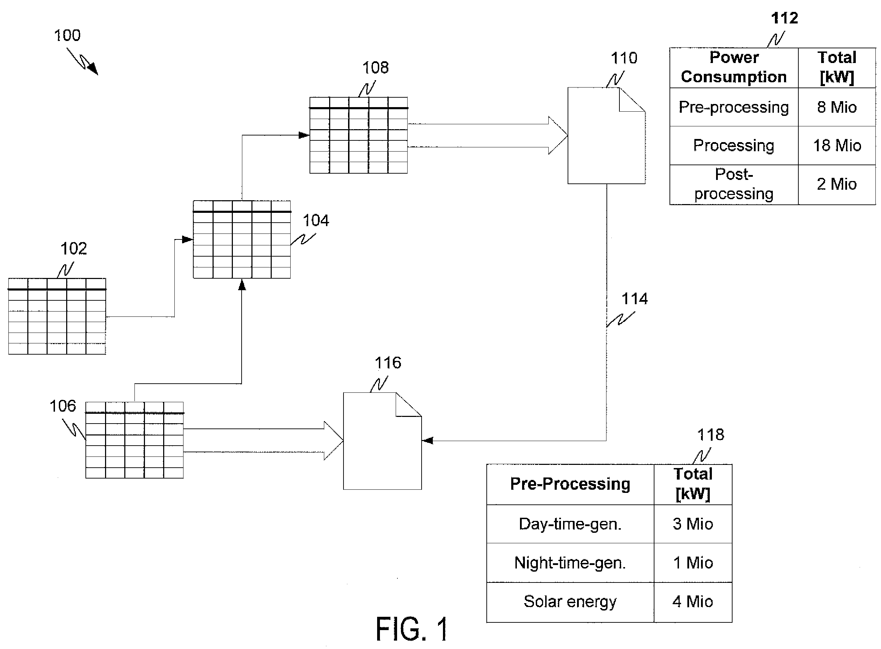

**FIG. 1** illustrates a representative reporting system 100. The reporting system may comprise data tables (also called database tables) stored in one or more databases. In this disclosure, data tables, database tables, and tables may be used inter-changeably. Representative data tables are illustrated as 102, 104, 106, and 108. Data tables typically comprise a plurality of rows and columns. Columns generally contain different data fields while rows generally contain values for the various data fields. Data tables may have relationships that relate records (rows) of one table to records (rows) of other tables. For example, one table may contain machines (machine-ID, machine-type, temperature, error-state, consumables-state) and another may contain machine parts or consumables and still another may contain production lines and buildings. A machine may be related to one or more machine-parts, a location and a production line. Relationships may also occur where one table contains "aggregated information" and a related table contains lower-level "detail" information.

In FIG. 1, first data tables 102 and 106 are related to first data table 104 and first data table 104 is related to first data table 108. Relationships may be one-to-one, one-to-many, or many-to-many. Data from a first table (or from multiple first tables) may be selected and placed into a first report for viewing or other purposes.

In FIG. 1, data from first data table 108 is selected and presented in first report 110. As an example, first report 110 may comprise aggregated information being stored in table 112, which includes a summary of various states in an automated industrial manufacturing process such as "pre-processing", "processing" and "post-processing" of a material or product along a production line. Each of the three states of the manufacturing process may be accomplished by one or more machines. The first report may be a report having been designed for providing a rough overview of the energy consumption at different states in the production line. A graphical representation of the first report may be communicated via a telecommunication network, e.g. a mobile internet connection and presented on a screen of a client device. For example, the graphical representation of the first report may be a HTML page comprising a HTML table, wherein each row of said HTML table comprises an aggregated data object. Said HTML page may be displayed by a browser of the client device on the screen of the client device.

According to the present disclosure, a user may select one of the aggregated data objects displayed in the first report 110 in order to receive, in a second report 116, more detailed information related to the selected aggregated data object. The selected information 114 may be used as discussed in detail e.g. for figure description 8 to locate the appropriate second tables and columns where related detailed information resides. Appropriate database queries for actually selecting and retrieving said detailed information may then be created automatically for the identified second tables. The database queries may comprise one or more selection criteria. The created database queries may then be used to extract the desired information for presentation in a second report 116.

In the Example of FIG. 1, the selected aggregated data object 114 comprises the "Pre-Processing" row. Second data table 106 contains the detail information for the power consumption of the individual production process states of the first report. Appropriate SQL queries may be automatically created and may be used to extract the desired information from second data table 106 into second report 116. In this example, second report 116 contains the information in second table 118, which includes the power consumption of the machines involved in the pre-processing, whereby the power-consumption is listed for predefined groups 'day-time generated', 'night-time generated' and 'solar energy'. Each of said categories 'day-time generated', 'night-time generated' and 'solar energy' may be assigned as second selection criteria to the first report.

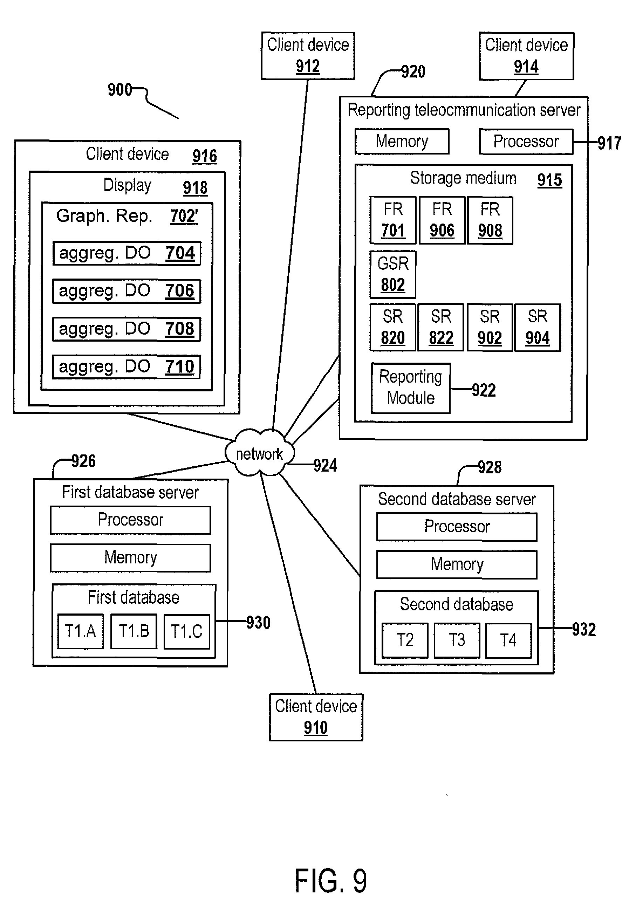

Thus, in an example embodiment a method may comprise receiving a selection of an aggregated data object displayed in a first report 110 and having been generated from a first data table. The first report or its graphical representation may be transmitted for display to a client device having submitted a request to system 100. For example, the request may be a request to receive aggregated information on the power consumption of various states of processing a material in a manufacturing process. In case the reporting system 100 determines that the device type of a client device having submitted the request comprises a display of sufficient size, the second selection criteria assigned to the first report 110 are automatically forwarded to a generic second report 106 according to sub-method a) as described above. The system may identify any second data tables where information related to the selected aggregated data object "pre-processing" and related to the second selection criteria 'day-time-generated', 'night-time-generated' and 'solar energy' reside. If said three second selection criteria correspond to the only three columns of the same database table, no additional second selection criteria will be sent to the generic second report. If said columns are part of two or more separate database tables, additional second selection criteria acting as identifiers for all columns contained in said two or more separate database tables will be sent to the generic second report. The generic second report will automatically generate database queries capable of retrieving information from all columns of said second data tables. The generic second report may then use the generated database queries to retrieve the information from the identified second data tables. The generic second report 116 may then be displayed. For example, a graphical representation of the generic second report may be returned via a network connection to the client device for enabling the client device to display said representation as depicted, for example, in FIG. 9.

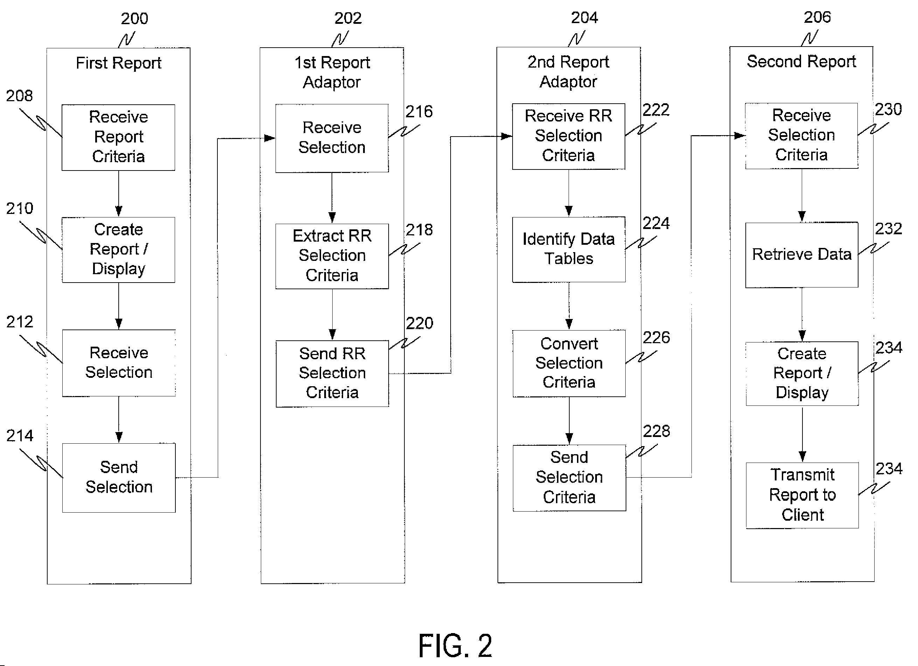

**FIG. 2** is a representative flow diagram of a reporting method involving a general second report generation according to sub-method a). A reporting telecommunication server may comprise a reporting module. The reporting module may comprise multiple sub-modules and database objects for creating and managing the first and second reports. The reporting module may comprise a first report 200, a first report adaptor 202, a second report adaptor 204 and a second report 206. The first report 200 may have assigned first selection criteria that define what information should be selected and displayed in the first report 200. The operation 208 illustrates receiving the first selection criteria. The first selection criteria may be predefined and assigned to the first report or may be entered by a user via a machine adapted to display an appropriate user interface or may be received from another entity such as another system, program, service, etc. In some embodiments, the first selection criteria are part of the first report, e.g. they may be defined in the source code underlying the first report.

The first report 200 may be created and/or displayed on a display device of a client device adapted to not only create/display the first report or a graphical representation thereof (e.g., operation 210) but also to receive a selection of some or all of the displayed aggregated data objects (e.g., operation 212) from, for example, a user. Once a user selects one of the aggregated data objects displayed in the first report 200, the selection indicating the selected aggregated data object is received by a reporting telecommunication server as indicated by operation 212. First report 200 may then send the selected aggregated data object or an identifier thereof to the first report adaptor 202 as indicated by operation 214.
The first report adaptor 202 receives the selected aggregated data object or its identifier as indicated in operation 216. The first report adaptor 202 may know the one or more first selection criteria used to generate the first report 200. These first selection criteria may be in the form of property values allowing the identification of tables or columns and allowing the automated creation of read or select statements to retrieve the data used to create the first report 200 from one or more first tables.

The first report adaptor 202 may also know one or more second selection criteria associated with the first report 200 and the columns and second tables that are identifiable by said second selection criteria. For example, the second selection criteria assigned to the first report may be `day-time-generated', 'night-time-generated' and 'solar energy'.

For example, the first report adapter may have access to a mapping table comprising an assignment of second selection criteria and second tables. Thus, the first report adaptor 202 may extract second selection criteria, also referred to as 'report-to-report' selection criteria, upon being notified of a selection event of the selected aggregated data object as indicated by operation 218. Second selection criteria may include any information needed by second report adaptor 204 to identify appropriate second data tables and columns where relevant information resides. For example, in some embodiments, a mapping, a data dictionary or other entity may contain information about the table relationships and may pass the information as part of the second selection criteria. In some embodiments, additional property values may be received upon a user selecting one of the aggregated data objects. For example, the additional property values may indicate a particular attribute value (i.e., 'property' or 'field' value) that was selected by the user when selecting the aggregated data object of the first report. The second selection criteria associated with the first report and said additional property values may be used for identifying the detailed information of the selected aggregated data object. In some embodiments, said additional property values act as additional second selection criteria.

The columns and/or rows of a table of the first report that were selected by the user selecting the aggregated data object may be identified for placing the information displayed in the first report in an appropriate format. Once the second selection criteria have been extracted (operation 218), they are sent to, or placed in, an appropriate location as indicated by operation 220. In the case of FIG. 2 the information is sent to the second report adaptor 204 of a generic second report. In alternative scenario, one or more special purpose second reports may be identified which have assigned one or more second selection criteria and which share at least one of their second selection criteria with one of the second selection criteria assigned to the first report.
The second report adaptor 204 of the generic second report obtains the second selection criteria assigned to the first report in operation 222. The second selection criteria may include information to allow the report-to-report adaptor to identify columns and second tables that comprise additional detailed information on the selected aggregated data object. The second report may receive additional property values which may allow limiting the retrieved detailed information for example to information stored in a second table in association with an identifier of the selected aggregated data object. From this information, the second report adaptor 204 may identify the second data tables that have relevant detailed information as indicated by operation 224.

By way of example, and not limitation, related detailed information may include information that supports and/or corresponds to the selected aggregated data object (such as supporting detail for summarized and/or aggregated data, controlling documents for selected data, master data display, line items for specific selection criteria, and so forth), contains the selected information (such as value(s) and/or text string(s), and so forth), and/or some combination thereof. The database columns that comprise the detailed information of a selected aggregated data object may be identified, for example, by means of a mapping. By way of example, and not limitation, some underlying data processing, e.g. some database management systems (DBMS) may use the mapping, which may comprise or be implemented as a data dictionary, that contains data definitions and/or other metadata about the data in the second tables. The second tables may comprise views on data tables. The mapping may comprise information on data elements/types, structure components, domains (e.g., technical characteristics of table field(s) and structure component(s)), and so forth. The mapping may be one source of information to identify in which second tables and columns related information of aggregated data objects presented by a particular first report reside.

According to embodiments, at least some of the second tables are database views. The database views may comprise additional detail information that is retrieved by one or more of the second reports.

In some embodiments, the mapping comprises one or more hierarchical levels. For example, a first report may have assigned some second selection criteria being identical to the names of respective columns of one or more second tables. The mapping may comprise, on a first hierarchical level, a mapping of said second selection criteria to said second tables. In addition, the mapping may comprise, on a second hierarchical level, all columns of other second database tables which are referenced by a secondary key stored in a second table of the first hierarchical level. Thus, said columns of said other second databases may be mapped indirectly, via secondary keys, to the second selection criteria. Evaluating the mapping for identifying columns of second databases comprising the detailed information may comprise evaluating multiple levels of said mapping and evaluating secondary database keys stored in further second database tables.

According to embodiments, the second hierarchical level consists of a matrix table, wherein each second table corresponds to a respective row and to a respective column of the matrix. If a matrix cell is marked with an 'X' or another symbol, the pair of second database tables represented by the respective column number and row number of said matrix cell are considered as related. For example, the matrix may comprise, for the second tables T1, T2, T3 and T4, the rows R-T1 to R-T4 and the columns C-T1 to C-T4. A relationship between second table s T2 and T3 would be indicated in the matrix by an 'X' in cell (R-T2, C-T3) and in cell (R-T3, C-T2). If table T2 is determined in the first hierarchical level of the mapping to comprise detailed information of the currently selected aggregated data object, table T3 will be identified, when evaluating the second hierarchical mapping comprising the matrix, as data source of further relevant detailed information and said detailed information will also be retrieved from table T3.

Operation 224 may include two fundamental operations: 1) identify the second selection criteria assigned to the first report and identify additional property values for identifying and selecting detailed information of the selected aggregated data object; and 2) identify the second data table(s) where the related information is located. To identify the second selection criteria, in some embodiments it is possible that the second report adaptor 204 examines the selected aggregated data object for identifying its properties, and use each identified property as the second selection criteria assigned to the first report.

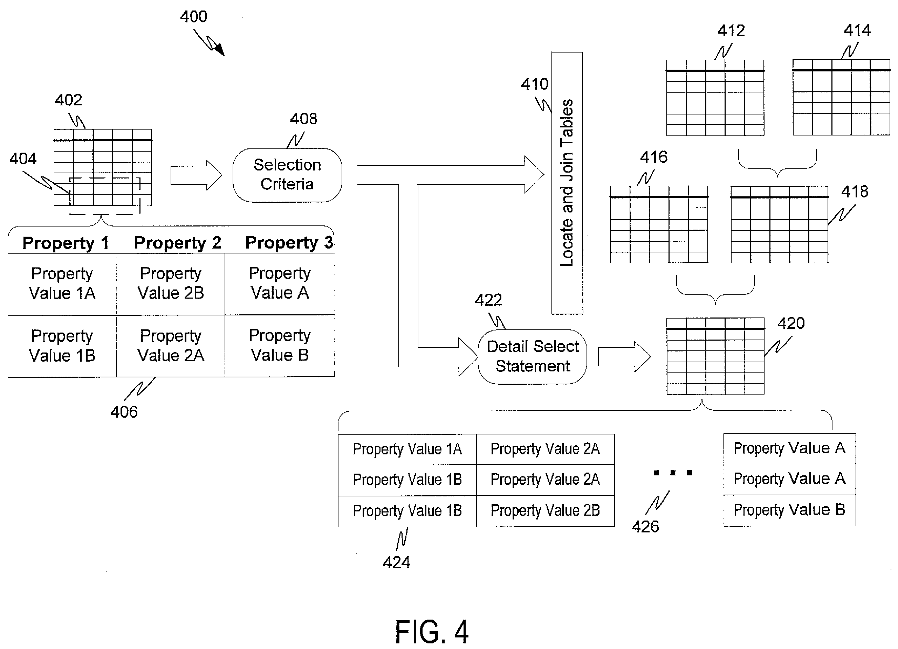

For example, the first report may give an overview of a power consumption of a production line. If the user selects an aggregated data object comprising the power consumption of all machines of an automated production line involved in pre-processing a particular material (aggregation of power consumption over multiple pre-processing machines), second selection criteria assigned to said first report may be identified by evaluating a mapping; the mapping may have the form of a mapping table or a data dictionary or may be implicitly derivable by searching second table relationships, etc.). To identify where the detailed information for the selected 'preprocessing' data object is located (e.g., which second tables, columns, and so forth contain the detailed information), the second report adaptor 204 may perform said evaluation.
In some embodiments, the initial selection of an aggregated data object displayed in the first report (e.g., operation 212) may include multiple property values, e.g. an object-identifier of said aggregated data object. Said properties in combination with the second selection criteria assigned to the first report may result in identifying related, detailed information residing in multiple second tables, perhaps even stored in multiple databases across the system. In such a situation, database operations such as various types of joinder operations may be performed on the multiple second tables so that related detailed information is brought together in an appropriate format. An example of this is discussed below in conjunction with FIG. 4.

Depending on various factors such as where the related detailed information resides, whether said detailed information resides in multiple tables, and/or whether database operations were performed on the second data tables, the second selection criteria may need to be modified or supplemented. For example, the database queries that are automatically generated and that include the second selection criteria assigned to the first report may be supplemented with additional, automatically determined second selection criteria. For example, said additional second selection criteria may consist of property values of the selected aggregated data object or may consist of technical parameters which are used for creating the database queries. Operation 226 illustrates any modification to the second selection criteria when generating the SQL database queries to extract the detailed information from the appropriate location(s). The resultant database queries may be directed at columns of second tables identified by the second selection criteria. In operation 228 the second selection criteria are sent according to sub-method a) to a generic second report. The generic second report 206 obtains the sent second selection criteria in operation 230, retrieves the related, detailed data in operation 232 and may transmit a graphical representation of the second report 206 in operation 234 to the client device.

For example, the second selection criteria assigned to the first report may be 'night-time produced energy', 'day-dime produced energy', 'solar energy' that may relate to different kinds of power sources. In order to determine the fraction of each of said kinds of power sources for the selected processing sate 'pre-processing', the mapping is accessed to identify the columns and tables comprising data a on the power consumption of pre-processing machines of each of said power source types.

If the user selects the aggregated data object "pre-processing" displayed in the first report, the generic second report will receive said second selection criteria, will identify all columns of all tables that comprise at least one column identified by one of the second selection criteria, and will generate database queries directed at said identified tables and columns. The generated database query may comprise the second selection criteria in the form of column names and/or table names. In addition, the database queries may comprise a property value 'pre-processing' to limit the amount of data to be retrieved. For example, the database queries (in pseudo code) could be:
*SELECT consumption from tables energy_consumption, machines where energy_type* = *'solar_energy'and wherein machine-usage*=*'pre-processing'join by machine*-*id group by `solar_energy';*
*SELECT consumption from tables energy_consumption, machines where energy_type* = *'day*-*time*-*produced energy' and wherein machine-usage*=*'pre-processing' join by machine*-*id group by 'day*-*time*-*produced energy';*
*SELECT consumption from tables energy_consumption, machines where energy_type* = *'solar_energy' and wherein machine*-*usage*=*'pre*-*processing' join by machine*-*id group by 'solar_energy';*
*SELECT consumption from tables energy_consumption, machines where energy_type* = *'night*-*time*-*produced energy' and wherein machine*-*usage*=*'pre-processing'join by machine-id group by 'night*-*time*-*produced energy';*

By executing said database queries, the generic second report is filled with the detailed data. The generic second report will comprise, for each of the power source types 'night-time produced energy', 'day-dime produced energy', 'solar energy', the amount of power consumed in a given time period by machines involved in the pre-processing of the material.

If 'post-processing' would have been selected, the automatically generated database queries could look like this:
*SELECT consumption from tables energy_consumption, machines where energy_type* = *'solar_energy'and wherein machine*-*usage*=***'post*-*****processing'** join by machine*-*id group by 'solar_energy';*
*SELECT [...]*

As a further example of how this might work in an illustrative embodiment, suppose first report 200 uses a main table (Table A) and displays an aggregated status report of a production line. A user selects a line from the first report as shown in operation 212. The first report adaptor 202 may receive (e.g., upon the user selecting the line in the first report comprising an aggregated data object) in operation 216 and extract the one or more second selection criteria in operation 218 from the first report and a mapping. The first report adaptor 202 sends the identified second selection criteria to a generic second report adaptor 204 (operations 220 and 222). The second report adaptor 204 uses the received second selection criteria and relationship information in a mapping, e.g. a data dictionary, to identify a table containing detail information (Table B) in operation 224. The second report adaptor 204 then converts the received second selection criteria to SQL database queries to select detailed information from second Table B in operation 226. This detailed information is then sent to the second report 206 in operations 228 and 230. Data is retrieved (operation 232) and displayed (operation 234).

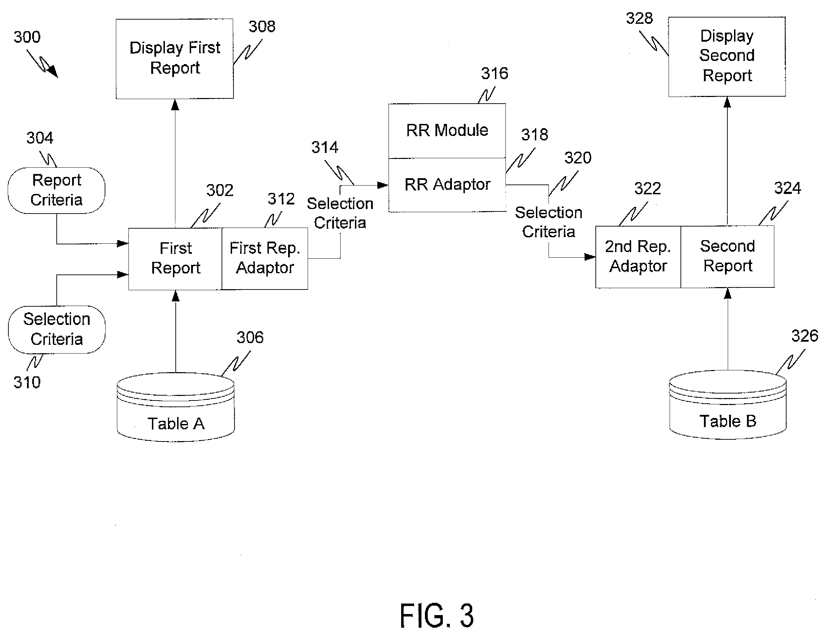

**FIG. 3** is a diagram illustrating a representative architecture of a reporting system. The architecture, shown generally as 300 may comprise a first report 302. The first report 302 may be a generic data report that is able to read any data from any data table or combination of data tables. In such embodiments the first report 302 may be a sort of generic data browser or a more traditional report associated with a database (or multiple databases) that may retrieve data meeting any selection criteria. In other embodiments, the first report 302 may be limited such that the range of applicable selection criteria is more circumscribed. When a generic report is used, the first report 302 may receive any report criteria 304 and read data from any data table as illustrated by the data table A 306. If a more restricted report is used, the first report 302 may receive report criteria 304 consistent with the design of the first report 302 and the data retrieved (e.g., information from data table A 306) is consistent with report criteria 304.

The information in the first report 302 may be displayed as indicated by operation 308. Displaying the information may be performed using a machine that not only allows display of information, but also allows receipt of input from a user or other entity. In the report-to-report scenario of FIG. 3, a user may select a portion or all of the displayed data and indicate that a second report should be generated based on data related to the selection. Operation 310 represents this process (e.g., selection of all or part of the displayed data and indicating that a report of related data should be generated).

The first report adaptor 312 may be associated with the first report 302. The first report adaptor 312 includes functionality that extracts and/or converts the selection to appropriate second selection criteria. The first report adaptor 312 may thus be a component or module associated with first report 302. Alternatively, the functionality provided by the first report adaptor 312 may be incorporated into the logic of the first report 302. The form of the selection 310 as it comes to the first report adaptor 312 may be a select statement, other selection criteria, information from which a select statement could be derived, the raw selected data (e.g., the rows and/or columns selected), or combinations thereof. Depending on the exact form of the selection 310 as it arrives to the first report adaptor 312, the first report adaptor 312 may be able to just extract the appropriate second selection criteria, or the first report adaptor 312 may need to create the appropriate second selection criteria. For example, if the selection includes a row within the first report 302 that contains an aggregation of controlling documents for a particular cost center, then the first report adaptor 312 may identify the appropriate data fields and/or values that would identify the selection of that information. In this example, perhaps that includes the cost center, a geographic region, and so forth. The resultant second selection criteria may include these items (e.g., machine type, temperature, cost center, geographic region, and so forth). Thus, second selection criteria may include any information needed by the second report adaptor 322 to identify appropriate data tables where relevant information resides. In some embodiments, extracting second selection criteria may comprise taking the information in the selection such as what columns and/or rows were selected, identifying the data fields and/or data values in the columns and/or rows and placing the information in an appropriate format.

Once the second selection criteria have been created/extracted, it is sent to, or placed in, an appropriate location as indicated by arrow 314. In the embodiment of FIG. 3 the second selection criteria may be sent to the report-to-report adaptor 318. In one embodiment, report-to-report adaptor 318 includes functionality that stores the received second selection criteria and then provides the stored second selection criteria 320 to the second report adaptor 322.

As illustrated in FIG. 3, the report-to-report adaptor 318 may be associated with a report-to-report module 316. The report-to-report module 316 may provide the report-to-report framework to coordinate all the various functionality in FIG. 3. For example, report-to-report module 316 may provide a unified interface between any kind of first report and any kind of second report. In addition, the report-to-report module may call additional tools/functionality to perform additional processing on the selection criteria 314 before being sent to second report adaptor 322. In a multisystem environment the report-to report module 316 may also use a remote function call or other remote functionality to hand over the selection criteria to another system. The report-to-report module 316 may also create a new screen to display the second report instead of using the current screen of the first report. Finally, report-to-report module 316 may identify (or ask a user to identify) which second report should be used if multiple appropriate second reports may fit a particular first report and/or selection criteria.

For example, a user selects aggregated data for 'pre-processing'. The report-to-report module 316 (and/or second report adaptor 322) identifies a plurality of second reports that are capable of displaying detailed information for some or all aspects of the selected aggregated data object. If two or more such second reports exist, the report-to-report module 316 may prompt a user to select one of the second reports. The second report adaptor 322 includes functionality to identify information related to the selection 310 from the second selection criteria 320, to identify where the related information resides, and to modify and/or create second selection criteria that allows retrieval of the related detailed information in a particular one of said second reports.

The second report adaptor 322 obtains the second selection criteria 320 as illustrated. The second selection criteria 320 may be used by the second report adaptor 322 for identifying the data tables, columns and/or database records that have related detailed information on a selected data object. By way of example, and not limitation, related detailed information may include information that supports and/or corresponds to the selected aggregated data object (such as supporting detail for summarized and/or aggregated data, controlling documents for selected data, master data display, line items for specific selection criteria, and so forth), contains the selected information (such as value(s) and/or text string(s), and so forth), and/or some combination thereof. Related detailed information may be identified, for example, based on report and/or data table relationships. By way of example, a data dictionary that contains data definitions and/or other metadata about the data in the system may be used for identifying the related detailed information. Information such as data tables, views on data tables, data elements/types, structure components, domains (e.g., technical characteristics of table field(s) and structure component(s)), and so forth may be stored in such a data dictionary. A data dictionary may be one source of information to identify where related detailed information resides. Relationships between tables (whether or not they are stored in the data dictionary) may also be a source of information to identify where the related detailed information resides.

To identify what related detailed information exists, the second report adaptor 322 may examine relationships to the second selection criteria assigned to the first report and/or may examine property values of the selected aggregated data object. For example, if the selected aggregated data object is an aggregated amount of power consumed at a 'pre-processing' stage, the sources of the aggregated data may be identified (for example by searching the data dictionary, table relationships, initial first report information, etc.). To identify where the related information is located (e.g., which data tables, structures, and so forth contain the information), the second report adaptor 322 may perform a similar evaluation. The search may be performed on multiple levels of a hierarchical mapping, e.g. by evaluating secondary keys of second tables. Sometimes these two evaluations (e.g., identifying what related information exists and the location of the related information) may occur at the same time (e.g., identifying what information exists yields the storage locations). Other times two separate inquiries may be used.

Different embodiments may have various ways of identifying relationships. By way of example, and not limitation, business logic may be defined as basis for the mapping. The mapping relates second tables to each other from a business perspective (e.g., total tables to line item tables). In another example, a data dictionary may store database table definitions (as previously described) so that relationships may be identified via the data dictionary. In yet a further example, different applications may have relationships between them. Such relationships may indicate relationships between tables or other documents used by the different applications. Thus, tables used by one application may have counterpart tables used by another, related application.

The initial report selection (e.g., selection 310) may include multiple fields and/or values. Such a selection may result in related information residing in multiple tables, perhaps stored in multiple databases across the system. In such a situation, database operations such as various types of joinder operations may be performed on the multiple tables so that related information is brought together in an appropriate format. An example of this is discussed below in conjunction with FIG. 4.

Depending on various factors such as where related information resides, whether related information resides in multiple tables, and/or whether database operations were performed on the data tables, the second selection criteria 314 may need to be modified. The modification may be different for different second reports used in sub-method b). The second report adaptor 322 includes functionality to make any modification to the report-to-report needed to extract the related detailed information from the appropriate location(s). Such modification may include, for example, constructing one or more database operations such as select statements and/or join statements in order to create selection criteria that may be utilized by second report 324 to extract the desired report-to-report information. The second selection criteria used by second report 324 to retrieve the desired information may take the form of one or more database operations such as select statements, or may be information from which such database operations may be constructed.

The second report adaptor 322 may pass the appropriate selection criteria to second report 324, and second report 324 may retrieve the desired information, such as table B 326 and, if desired, display the information as illustrated by operation 328. To summarize **FIG.** 3, a first report 302 containing multiple rows and/or columns of information drawn from one or more first data tables 306 may be displayed to a user of a machine. A user may select all or a portion of the displayed information. A first report adaptor 312 may extract second selection criteria 314 from the first report and extract additional property values from the selected information. A second report adaptor 322 may identify second data tables 326 where information related to the second selection criteria 320 resides. If such information resides in multiple second data tables, the second report adaptor 322 may join the multiple second data tables into one or more data tables.

The second report adaptor 322 may convert the second selection criteria 320 and optionally also the further property values into database queries for the identified second data table(s) and/or joined second data table(s). The database queries may be passed to a generic second report 324 adapted to retrieve any information from any data table(s). The second report adaptor 322 may be implemented as a component of the second report. The generic second report 324 may retrieve detailed information according to the passed database queries and display the detailed information 328 to the user.

Alternatively, the second report adaptor 322 may forward the second selection criteria 320 and optionally also the further property values to the generic second report 324 adapted to generate database queries that use said second selection criteria and optional property values for identifying and retrieving detailed information related to the selected aggregated data object from the second data tables.

**FIG.** 4 is a diagram illustrating information selection by using second selection criteria assigned to a first report and by using additional selection criteria derived from property values of the selected aggregated data object. This example, shown generally as 400, illustrates how multiple properties of the selected aggregated data object may lead to database operations like a join operation. In this example, the first report 402 is displayed to a user and a user selects two aggregated data objects 404 contained in the displayed data of the first report. The table 406 shows an enlarged version of the selected region where three columns and two rows are selected. Each row corresponds to an aggregated data object and each column corresponds to a particular property of said aggregated data objects. All aggregated data objects listed in the first report have the same set of properties (tabular view) but may have different property values. Each property "Property 1", "Property 2" and "Property 3" may be used as starting point for identifying second selection criteria assigned to the first report. The first selected column contains property value 1A and property value 1 B. The second selected column contains property value 2A and property value 2B and the third column contains property value A and property value B.

The information in the table 406 may be used for limiting the amount of detailed information retrieved by the dataset queries created from the second selection criteria assigned to the first report.

Second selection criteria 408 allow identification and retrieval of detailed data of the selected aggregated data objects. In this example, the detailed data is all supporting records that is contained in a column identified by a second selection criterion assigned to the first report and that in addition comprises property value 1A, property value 1 B, property value 2A, property value 2B, property value A or property value B.

Operation 410 illustrates the process of locating the related, detailed information. In this example, assume the related data of property value 1A and property value 1 B exist in second table 412, the related data of property value 2A and property value 2B exist in second table 414 and the related data of property value A and property value B exist in second table 416. The property values may be Integers, character strings, Booleans or the like. In such a situation, second tables 412 and 414 may be joined along the appropriate column to produce temporal table 418. The second table 416 may then be joined along an appropriate column to temporal table 418 to produce temporal table 420. Said temporal table 420 now contains the appropriate related detailed information as shown in the enlarged view 424. In the enlarged view 424, the ellipses 426 illustrate that any number of additional columns that may be added to the table 420 as part of the join operations.

The second selection criteria 408 may then be used for generating an appropriate detailed select statement 422 to select the related information from temporal table 420.

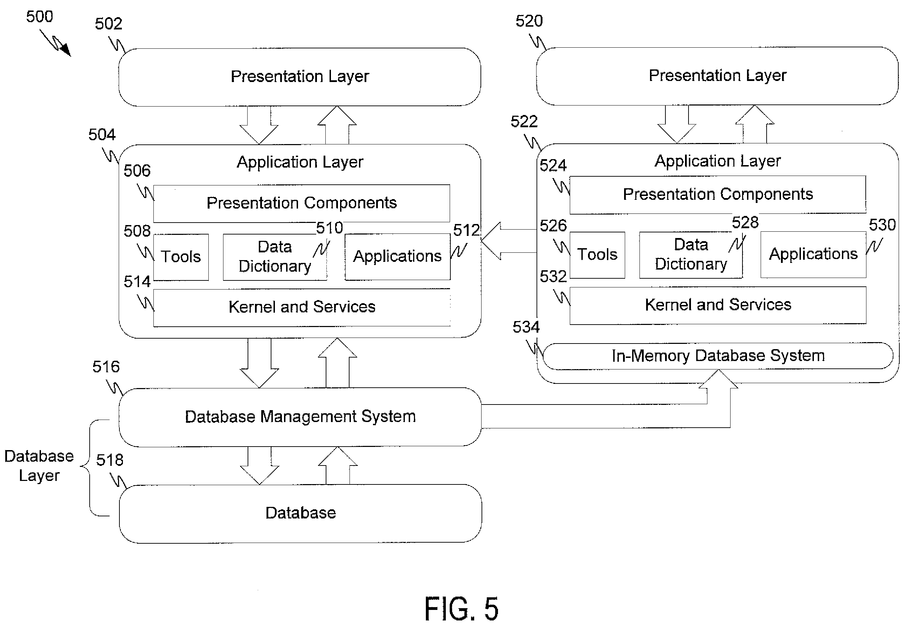

**FIG.** 5 illustrates use of an in-memory database in one of two configurations (shown generally as 500) in conjunction with the methodologies discussed herein. The use of generic second reports that may select data from any column of any data table may be facilitated by the use of an in-memory database comprising an index on each of its table columns that can select any column in a database table without the need for specifically creating an index. Also, systems may have very large tables with thousands, tens of thousands or hundreds of thousands of entries, implementations that use database systems to handle the tables and implement the described methods may benefit from in-memory database technology. One example of a suitable in-memory database is the HANA in-memory database system available from SAP AG of Walldorf, Germany. In-memory database systems do not necessarily always maintain all data within memory at all times, but the relevant data is in memory when it needs to be and many-fold improvements are seen using these systems over traditional disk based systems.

Like the HANA in-memory database system, the system of FIG. 5 illustrates two separate deployments, a side-by-side deployment where the in-memory database is deployed in conjunction with a traditional disk based database system and a standalone deployment where the in-memory database system is deployed without a traditional disk based database system. Thus not every component illustrated in FIG. 5 may be provided for every specific embodiment.

The embodiment of FIG. 5 may represent a side-by-side deployment where an in-memory database is deployed alongside a standard database management system. This may have several benefits, including acceleration of data read and/or writes. A side-by-side type of deployment may also allow acceleration without substantial changes in the existing deployment infrastructure or technologies. In one type of side-by-side deployment, reads and/or writes that would normally be directed to the traditional database are handled by the in-memory database instead. The in-memory database may interact with database management system 516 and/or database 518.

Such a side-by-side deployment may include presentation layer 502, application layer 504, database management system 516, database 518 and in-memory database system 534, possibly deployed in either the same application layer (e.g., 504) or a different application layer (e.g., 522). An application layer 504, 522 may comprise presentation components (e.g., 506, 524). Presentation components may include components such as screen interpreter(s), interfaces, dialog control, etc. An application layer 504, 522 may also comprise kernel and services (e.g., 514, 532). Kernel and services may include components such as an interpreter and/or other components that implement the runtime environment. An application layer 504, 522 may also comprise tools (e.g., 508, 526) and/or applications (e.g., 512, 530). An application layer 504, 522 may also comprise a data dictionary (e.g., 510, 528) to provide information, data structures, definitions, etc. in a database independent format. These data dictionaries may include information used by various embodiments as previously described.

FIG. 5 may also illustrate a stand-alone deployment where an in-memory database runs in the application layer 522 along with any applications 530 and/or tools 526. In this type of deployment, presentation layer 520 supports application layer 522. In-memory database system 534 provides the database support. The other components (e.g., presentation layer 502, application layer 504, database management system 516 and database 518) do not exist in a stand-alone deployment.

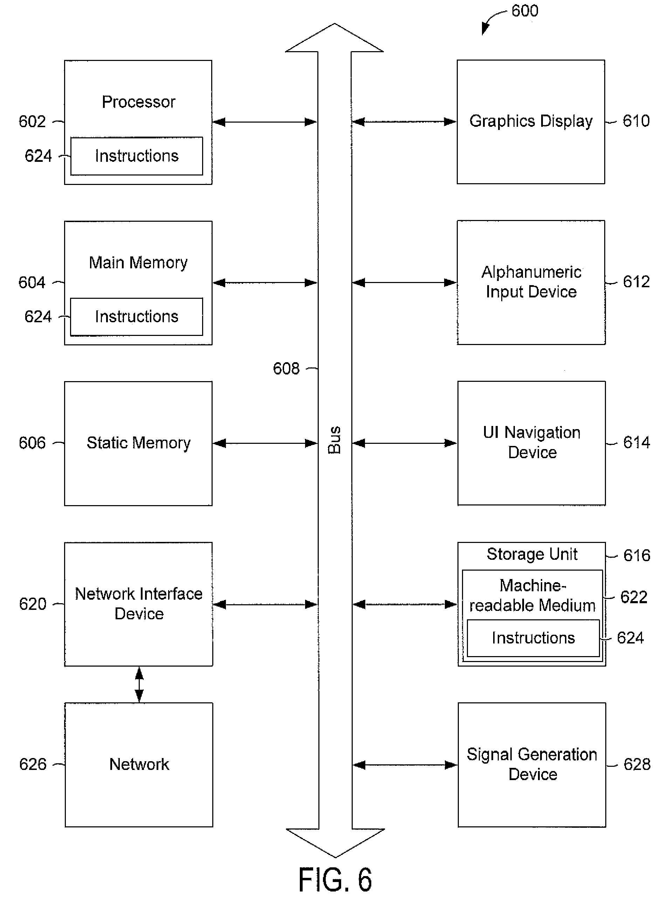

**FIG. 6** is a block diagram of a computer processing system 600, e.g. a reporting telecommunication server, within which a set of instructions 624 for causing the computer to perform any one or more of the methodologies discussed herein may be executed.

As will be appreciated by one skilled in the art, aspects of the present disclosure may be illustrated and described herein in any of a number of patentable classes or context including any new and useful process, machine, manufacture, or composition of matter, or any new and useful improvement thereof. Accordingly, aspects of the present disclosure may be implemented entirely in hardware, entirely in software (including firmware, resident software, micro-code, etc.) or combining software and hardware implementations that may all generally be referred to herein as a "circuit," "module," "component," or "system." Furthermore, aspects of the present disclosure may take the form of a computer program product embodied in one or more computer readable media having computer readable program code embodied thereon. In addition to being sold or licensed via traditional channels, embodiments may also, for example, be deployed by software-as-a-service (SaaS), application service provider (ASP), or utility computing providers. The computer may be a server computer, a personal computer (PC), a tablet PC, a set-top box (STB), a personal digital assistant (PDA), cellular telephone, or any processing device capable of executing a set of instructions 624 (sequential or otherwise) that specify actions to be taken by that device. Further, while only a single computer is illustrated, the term "computer" shall also be taken to include any collection of computers that individually or jointly execute a set (or multiple sets) of instructions 624 to perform any one or more of the methodologies discussed herein.

The example computer processing system 600 includes a processor 602 (e.g., a central processing unit (CPU), a graphics processing unit (GPU), advanced processing unit (APU) or some combination thereof), a main memory 604 and static memory 606, which may communicate with each other via a bus 608. The computer processing system 600 may further include a graphics display 610 (e.g., a plasma display, a liquid crystal display (LCD) or a cathode ray tube (CRT) or other display). The processing system 600 may also include an alphanumeric input device 612 (e.g., a keyboard), a user interface (UI) navigation device 614 (e.g., a mouse, touch screen, or the like), a storage unit 616, a signal generation device 628 (e.g., a speaker), and/or a network interface device 620.

The storage unit 616 includes a machine-readable medium 622 on which is stored one or more sets of data structures and instructions 624 (e.g., software) embodying or utilized by any one or more of the methodologies or functions described herein. The instructions 624 may also reside, completely or at least partially, within the main memory 604 and/or within the processor 602 during execution thereof by the computer processing system 600, with the main memory 604 and the processor 602 also constituting computer-readable, tangible media.

The instructions 624 may be transmitted or received over a network 626 via a network interface device 620 utilizing any one of a number of well-known transfer protocols (e.g., HTTP).

While the machine-readable medium 622 is shown in an example embodiment to be a single medium, the term "machine-readable medium" should be taken to include a single medium or multiple media (e.g., a centralized or distributed database, and/or associated caches and servers) that store the one or more sets of instructions 624. The term "machine-readable medium" shall also be taken to include any medium that is capable of storing, encoding or carrying a set of instructions 624 for execution by the computer and that cause the computer to perform any one or more of the methodologies of the present application, or that is capable of storing, encoding or carrying data structures utilized by or associated with such a set of instructions 624. The term "machine-readable medium" shall accordingly be taken to include, but not be limited to, solid-state memories, and optical and magnetic media. The term "machine-readable storage medium" does not include signals or other intangible mechanisms. Such intangible media will be referred to as "machine-readable signal media." The term "machine-readable media" will encompass both "machine-readable storage media" and "machine-readable signal media."

While various implementations and exploitations are described, it will be understood that these embodiments are illustrative and that the scope of the claims is not limited to them. In general, techniques for maintaining consistency between data structures may be implemented with facilities consistent with any hardware system or hardware systems defined herein. Many variations, modifications, additions, and improvements are possible.

While the embodiments are described with reference to various implementations and exploitations, it will be understood that these embodiments are illustrative, and that the scope of claims provided below is not limited to the embodiments described herein. In general, the techniques described herein may be implemented with facilities consistent with any hardware system or hardware systems defined herein. Many variations, modifications, additions, and improvements are possible.

The term "computer readable medium" is used generally to refer to media embodied as non-transitory subject matter, such as main memory, secondary memory, removable storage, hard disks, flash memory, disk drive memory, CD-ROM and other forms of persistent memory. It should be noted that program storage devices, as may be used to describe storage devices containing executable computer code for operating various methods, should not be construed to cover transitory subject matter, such as carrier waves or signals. "Program storage devices" and "computer-readable medium" are terms used generally to refer to media such as main memory, secondary memory, removable storage disks, hard disk drives, and other tangible storage devices or components.

Plural instances may be provided for components, modules, operations, or structures described herein as a single instance. Finally, boundaries between various components, modules, operations, and data stores are somewhat arbitrary, and particular operations are illustrated in the context of specific illustrative configurations. Other allocations of functionality are envisioned and may fall within the scope of the claims. In general, structures and functionality presented as separate components in the exemplary configurations may be implemented as a combined structure, module, or component. Similarly, structures and functionality presented as a single module or component may be implemented as separate modules or components. These and other variations, modifications, additions, and improvements fall within the scope of the claims and their equivalents.

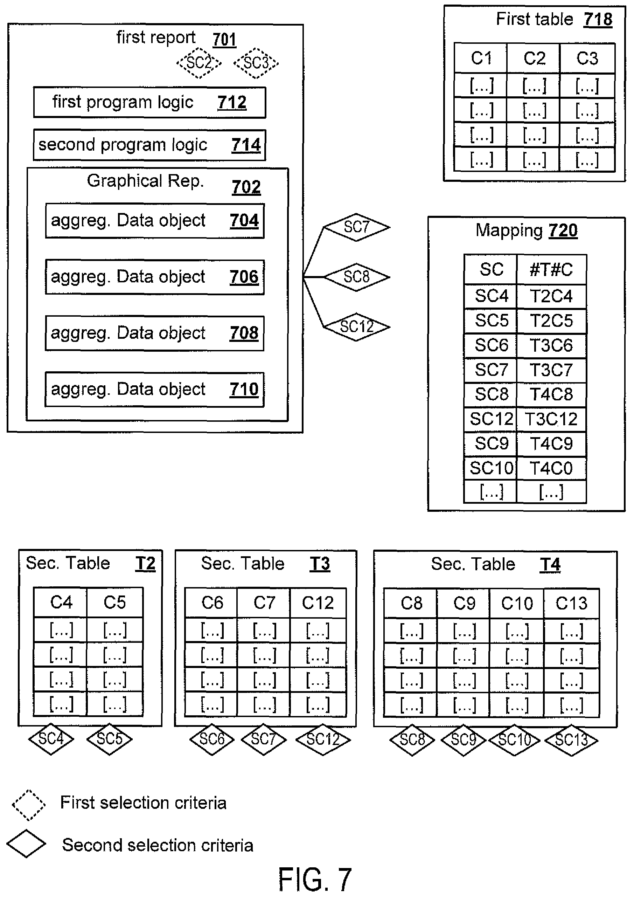

**FIG. 7** shows a first report that may be generated by a reporting telecommunication server and may be transferred via a telecommunication network to a client device whose user may have triggered the generation of the first report by sending a request. A first database table 718 comprises three columns C1-C3. Any first database table may act, alone or in combination with other first database tables, as data source for the first report. In the case depicted in FIG. 7, the first report 701 has assigned first selection criteria SC2 and SC3 as indicated by the dotted boxes within the first report. The first selection criteria define what kind of information is retrieved from one or more of the first tables. Retrieving the information from the first table 718 may comprise applying an aggregated function on the information read from the first tables. Alternatively, the information stored in the first table(s) may already be stored in an aggregated state. The aggregated information is displayed in the first report, e.g. in the form of a list of aggregated data objects. The list of aggregated data objects may be presented in the first report in tabular form, wherein each row corresponds to an aggregated data object and each column corresponds to a property of the aggregated data object (see Fig. 4).

The first report may be the one first report auf of a plurality of first report provided by a reporting telecommunication server that is transferred to the client device for enabling the user of the client device to select one or more aggregated data objects 704-710 that are contained in a graphical representation of the first report 701. The first report may comprise some first program logic 712 configured for identifying and retrieving the aggregated data objects 704-710 from the first table 718. The first report may comprise some second program logic 714 configured for displaying the aggregated data objects 704-710 in the first report. This may comprise generate a graphical representation of the first report, e.g. an HTML page, and transmitting the graphical representation over a telecommunication network to the client device.

The first report has also assigned second selection criteria SC7, SC8 and SC9. Depending on the embodiment, the second selection criteria may be firmly and invariantly assigned to the first report or may be dynamically assignable and deassignable by the user of the client device (see, for example, FIG 4, but other options for de- and re-assigning second selection criteria exist, e.g. pull-down menus and checkboxes).

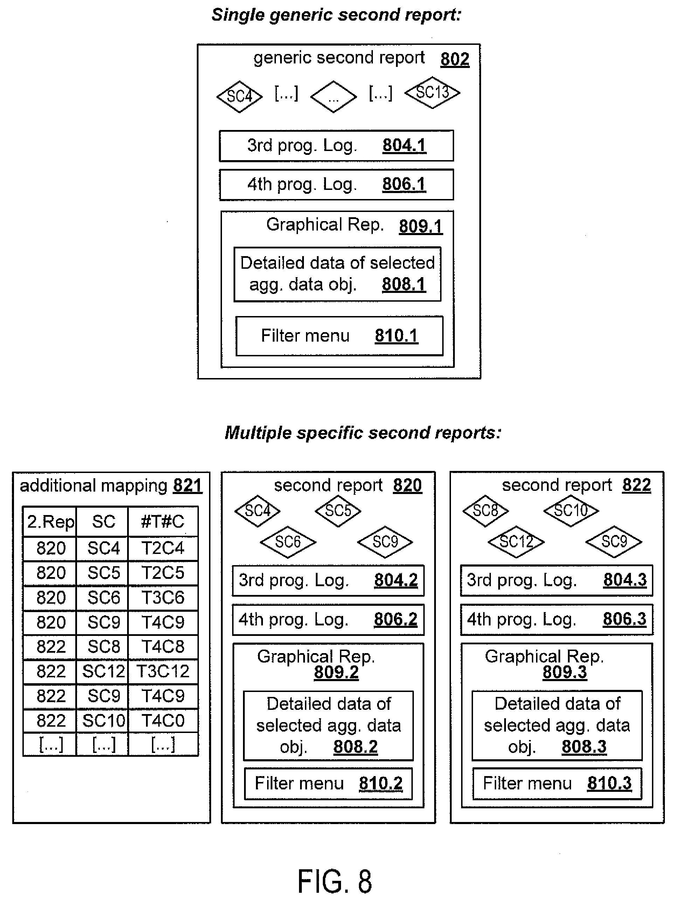

In case the user selects one or more of the aggregated data objects, the generation and presentation of a second report comprising detailed information on the selected aggregated data object is triggered. This can be executed either by a sub-method a) using single generic second report or by a sub-method b) using one or more selectable, specially adapted second reports (see FIG. 8). Which sub-method is used depends on some device type identifier received by the reporting telecommunication server from the client device. A single generic second report is used when the device type identifier indicates that the size of the display of the client device exceeds a particular threshold value.

The detailed information related to the selected data object 704-710 is derived from one or more columns of one or more of the second tables T2-T4. For identifying the columns and second tables comprising the related detailed information, a mapping 720 may be used. For example, the mapping 720 assigns the second selection criteria SC7, SC8 and SC9 which are assigned to the first report the following columns: SC7→table T3 column C7; SC8→table T4 column C8; SC9→table T3 column C12.

**FIG. 8** shows, in its upper part, a 'generic' second report 802 that is used when sub-method A) is executed.

The generic second report 802 comprises third program logic 804.1 that is capable of selecting and retrieving any kind of information identified by any of the second criteria SC4-SC13 defined within the reporting system from anyone of the second tables T2-T4. Thus, the generic second report is not limited to retrieving a particular kind of detailed information. Rather, the generic second report comprises some processing logic that is able to receive one or more second selection criteria, to generate database queries for accessing columns of the second tables that are assigned, by a mapping 720, to anyone of said received second selection criteria. For example, the SQL queries generated for the generic second report may fit to all second tables available. Alternatively, there may be predefined SQL statements for one or more of the second tables. Detailed information related to the selected aggregated data object is retrieved from said columns by the second report 802 and is used for generating a graphical representation 809.1 of the second report that is returned, via a network, to a client device. The second selection criteria that are sent to the generic second report comprise the second selection criteria SC7, SC8, SC12 assigned to the currently displayed first report 701 and comprise additional second selection criteria identifying all columns of those second tables comprising at least one column that is identifiable by at least one of the second selection criteria SC7, SC8, SC12.

In the depicted example of figure 7, the set of second selection criteria sent to the generic second report 802 comprises:
For second selection criterion SC7, the second table T3 is identified that comprises the columns C6, C7 and C12 respectively being identified by second selection criteria SC6, SC7 and SC12. Therefore, the set of sent second selection criteria comprises, in addition to SC7, also SC6 and SC12.

For second selection criterion SC8, the second table T4 is identified that comprises the columns C8, C9, C10 and C13 respectively being identified by second selection criteria SC8, SC9, SC10 and SC13. Therefore, the set of sent second selection criteria comprises, in addition to SC8, also SC9, SC10 and SC13.

For second selection criterion SC12, the same logic is applied as for SC7. No additional second selection criterion is added to the set because all selection criteria for table T3 have already been added to the set.

In its lower part, FIG. 8 shows two 'special purpose' second reports 820 and 822 and a further mapping 821 that assigns second selection criteria to said 'special purpose' second reports.

For example, second report 820 has assigned second selection criteria SC4, SC5, SC6 and SC9. Said assignment may be implemented, for example, by an additional mapping 821 that may be implemented as a relational database table, as a data dictionary, as a configuration file or the like. Second report 820 comprises some program logic 804.2 capable of retrieving detailed information that is identified by said second selection criteria SC4, SC5, SC6 and SC9. Selection criterion SC4 indicates that the detailed information needs to be retrieved from table T2 column C4; selection criterion SC5 indicates that the detailed information needs to be retrieved from table T2 column C5; Selection criterion SC6 indicates that the detailed information needs to be retrieved from table T3 column C6; and so on. The names of the tables and columns identified by each second selection criterion may be stored in the mapping 720, the additional mapping 821 or in another data structure. In addition, the second report 820 may comprise program logic 806.2 for displaying the detailed information retrieved via said second selection criteria SC4, SC5, SC6 and SC9. Execution of said program logic will result in the generation of a graphical representation 809.2 of said second report comprising the retrieved detailed information. Said graphical representation, e.g. a HTML page, may be communicated via the telecommunication network to the client device.

Second report 822 has assigned second selection criteria SC8, SC9, SC10 and SC12. Second report 822 comprises some program logic 804.3 capable of retrieving detailed information that is identified by said second selection criteria SC8, SC9, SC10 and SC12. The report 822 may comprise program logic 806.3 for displaying the detailed information retrieved via said second selection criteria as described already for second report 820.

Optionally, the graphical representation of each of the second reports 802, 820, 822 may comprise a filter menu 810 allowing a user to hide some properties of the detailed information. For example, the graphical representation of the second report may be a HTML table whose individual columns are selectable and may be hidden upon the user clicking at a particular GUI element. This may further reduce the amount of data displayed on a client device.

**FIG. 9** shows a reporting system 900 comprising a reporting telecommunication server 920 that is configured for generating one or more first reports 701, 906, 908, a generic second report 802 and a plurality of special purpose second reports 820, 822, 902, 904. It comprises a reporting module that may be operable to generate and manage the reports in dependence on the device type of a client device 916, 910, 912, 914 having submitted a request. The reporting module 922 may comprise several report adapter objects and/or rules for identifying first and second selection criteria assigned to the first or second reports.

Aggregated data may be retrieved from one or more first tables T1.A-T1.C of a first database 930 hosted by a first database server 926. The retrieved aggregated data may be displayed in the form of aggregated data objects 704-710 by means of a first report 701 whose graphical representation 702' is displayed on the screen 918 of a client device 916. If a user of the client device 916 selects one or more aggregated data objects as explained e.g. for FIG 4, a message is generated by the client device 916. The message is sent via a telecommunication network 924 to the reporting telecommunication server 920. The message comprises at least the second selection criteria assigned to the first report 701 whose graphical representation 702' is currently displayed on the screen 918. Optionally, the message may in addition comprise some information of the selected aggregated data objects, e.g. object identifiers, property values, the kind of property that was selected and the like. Said additional information may be used for generating SQL queries with a more limited scope for retrieving detailed information related to the selected aggregated data object(s). In addition, the message may comprise device type information of the client device 916. Alternatively, said device type information is transmitted to the reporting telecommunication server in a separate message.

In response to receiving the message, the reporting module 922 of the reporting telecommunication server 920 will generate one or more second reports according to sub-method a) or b) as described previously. The generic second report 802 or a user-selected special purpose second report 822 are filled with detailed information stored in one or more second tables T2-T4 of a second database 932 hosted by a second database server 928. A graphical representation of the second report comprising said detailed information is generated by a processor of the server 920 and is transmitted to the client device 916 for display.

## Claims

1. A reporting method for a multi-client telecommunication network (924), the network comprising a plurality of client devices (910, 912, 914, 916) and a reporting telecommunication server (920), the reporting method being implemented by the reporting telecommunication server and comprising:
- receiving a request from one (916) of the client devices;
- generating a first report (110, 701), the first report being a data object having assigned one or more first selection criteria (SC2, SC3), and one or more (SC7, SC8, SC12) of a plurality of second selection criteria (SC4-SC13), the first report comprising aggregated data objects (704-710) retrieved from at least one first database table (306, 718, T1.A, T1.B, T1.C) by using the first selection criteria, whereby a database table assigns at least two pieces of information to each other;
- sending a first graphical representation (702) of the first report with the retrieved aggregated data objects to the one client device via the network for display on a screen of said one client device;
- receiving (222) a user's selection of one (706) of the displayed aggregated data objects via the network;
- accessing a mapping (720), the mapping assigning each second database table of a plurality of second database tables (326, T2, T3, T4) a sub-set ({SC4, SC5, SC6}; {SC7, SC8, SC12}; {SC9, SC10} {SC8, SC10, SC11, SC12, SC13}) from the plurality (SC4-SC13) of second selection criteria, each second selection criterion defining the identification and retrieval of data stored in the second database table (326, T2, T3, T4) assigned in said mapping to said second selection criterion;
- retrieving detailed information of the selected aggregated data object by a sub-method a); and
- sending a second graphical representation of a further report for display to the client device, wherein the further report comprises said detailed information;
wherein sub-method a) implemented by the reporting telecommunication server comprises:
- identifying (224), by evaluating the mapping (720), all (326, T3, T4) second database tables (326, T2, T3, T4) having assigned at least one of the second selection criteria assigned to the first report;
- identifying, by further evaluating the mapping (720), all second selection criteria (SC6, SC7, SC12, SC8, SC9, SC10, SC13) contained in any one of the second selection criteria sub-sets assigned to any one of the identified (326, T3, T4) second database tables;
- sending (228) the identified second selection criteria to a second report (324, 802), the second report being a data object configured to select any information identified by any sent second selection criteria (SC4-SC13) from any one of the second database tables (326, T2, T3, T4); and
- retrieving (232) information (808.1) identified by the sent second selection criteria (SC6, SC7, SC12, SC8, SC9, SC10, SC13) from the identified (326, T3, T4) second database tables;
- supplementing the second report with said retrieved information (808.1); and
- using said retrieved information as the detailed information and using said second report as the further report.

2. The reporting method of claim 1, wherein the reporting telecommunication server further implements a sub-method b), the reporting method further comprising:
- the reporting telecommunication server receiving device type information of the client device;
- the reporting telecommunication server using the retrieved device type information for automatically determining if the retrieving of the detailed information of the selected aggregated data object shall be executed by the sub-method a) or by the sub-method b),
wherein sub-method b) implemented by the reporting telecommunication server comprises:
- providing a plurality (820, 822, 324) of second reports;
- providing a further mapping (821), the further mapping assigning each one of the second reports to one or more of the plurality of second selection criteria (SC4-SC13), each second report being configured to select any information identified by the one or more second selection criteria assigned to said second report from one or more of the second database tables (326, T2, T3, T4);
- evaluating the further mapping (821) for identifying all second reports (822) having assigned at least one of the second selection criteria (SC7, SC8, SC12) assigned to the first report;
- sending a list of all identified second reports to the client device;
- receiving the user's selection of one (822) of the second reports of said list;
- identifying, by evaluating the mapping (720), one or more second database tables having assigned at least one of the second selection criteria assigned to the selected second report;
- retrieving (232) information (808.2, 808.3) identified by the second selection criteria (SC8, SC9, SC10, SC12) assigned to said selected second report from said identified one or more second database tables;
- supplementing the selected second report with said retrieved information; and
- using said retrieved information as the detailed information and using said selected second report as the further report.

3. The reporting method of claim 2, further comprising:
- the reporting telecommunication server determining if the device type information indicates that the display size of the client device having sent the request is below a threshold size;
- if the display size is below the threshold, performing the execution of the sub-method b);
- otherwise, performing the execution of the sub-method a).

4. The reporting method of any one of the previous claims, wherein the at least one first database table belongs to a first database (930) and the second database tables belong to a second database (932), the second database being separate from the first database.

5. The reporting method of any one of the previous claims, wherein at least one of the second selection criteria (SC4-SC13) is an identifier for a column (C4-C13) of one of the second database tables (326, T2, T3, T4) being assigned to said at least one second selection criterion in the mapping (720).

6. The reporting method of claim 5, wherein at least each of the columns (C4-C13) being identified by any one of the second selection criteria of the plurality of second selection criteria (SC4-SC13) comprises an index that is used for selecting (232) the information contained in said column.

7. The reporting method of claim 5 or 6, wherein all columns of all tables of a database management system comprising the second database tables (326, T2, T3, T4) respectively comprise an index that is used for selecting (232) the information contained in said column.

8. The reporting method of any one of the previous claims, wherein an application program (922) implements the reporting method of any one of the previous claims, wherein the second database tables are managed by a database management system, the method further comprising:
- at deployment time of the application program, providing the mapping (720), wherein the mapping comprises, for each column and for each table contained in said database management system, a second selection criterion adapted to identify said column.

9. The reporting method of any one of the previous claims, further comprising automatically creating, upon execution of program logic (804.1-804.3) contained in the second report, database operations to join the multiple second database tables for retrieving the detailed information, the database operations comprising the second selection criteria.

10. The reporting method of any one of the previous claims, wherein the sent first graphical representation comprises first customizing GUI elements, the first customizing GUI elements enabling a user to modify the assignment of the second selection criteria (SC7, SC8, SC12) to the first report, the modification including the assignment of additional second selection criteria (SC4-SC6, SC9-SC11, SC13) that are contained in the mapping (720) and currently being unassigned to said first report.

11. The reporting method claim 10, further comprising:
- the reporting telecommunication server evaluating the mapping (720) and the second selection criteria (SC7, SC8, SC12) currently assigned to the first report for identifying the second selection criteria (SC4-SC6, SC9-SC11, SC13) being contained in the mapping (720) and currently being unassigned to said first report;
- sending a graphical representation of said identified second selection criteria for display to the client device;
- the reporting telecommunication server receiving the user's selection of one or more of said displayed second selection criteria;
- the reporting telecommunication server assigning said user selected second selection criteria to the first report; and
- automatically repeating the method of any one of the previous claims.

12. The reporting method of any one of the previous claims, wherein all second database tables are contained in a second database, the method further comprising:
- automatically identifying all columns of all second database tables contained in said second database which are identified by one of the plurality of second selection criteria (SC4-SC13) and which lack an index;
- automatically creating an index for each of said identified columns.

13. The reporting method of any one of the previous claims, wherein each one of the sub-sets of second selection criteria comprises multiple second selection criteria and/or wherein the first report has assigned multiple second selection criteria and wherein the identifying of the one or more second database tables comprises identifying multiple second database tables.

14. A telecommunication system (600) comprising a reporting telecommunication server (920) connected via a network (924) to multiple client devices (910-916), the reporting telecommunication server comprising:
- memory (604);
- a computer processor (602, 917) coupled to the memory; and
- instructions (624) stored in the memory and executable by the processor, the instructions, when executed by the processor, cause the processor to execute the steps of any one of claims 1-13.

15. A non-transitory storage medium (915) comprising instructions which, when executed by a processor (602, 917) cause the processor to execute the steps of any one of claims 1-13.

## Patentansprüche

1. Berichterstellungsverfahren für ein Multi-Client-Telekommunikationsnetz (924), wobei das Netz mehrere Client-Vorrichtungen (910, 912, 914, 916) und einen Berichterstellungstelekommunikationsserver (910) aufweist, wobei das Berichterstellungsverfahren vom Berichterstellungstelekommunikationsserver implementiert wird und Folgendes aufweist:
- Empfangen einer Anforderung von einer (916) der Client-Vorrichtungen;
- Erzeugen eines ersten Berichts (110, 701), wobei der erste Bericht ein Datenobjekt ist, dem ein oder mehr erste Auswahlkriterien (SC2, SC3) und ein oder mehr (SC7, SC8, SC12) von mehreren zweiten Auswahlkriterien (SC4 - SC13) zugeordnet sind, wobei der erste Bericht aggregierte Datenobjekte (704 - 710) aufweist, die unter Verwendung der ersten Auswahlkriterien aus wenigstens einer ersten Datenbanktabelle (306, 718, T1.A, T1.B, T1.C) abgerufen werden, so dass eine Datenbanktabelle wenigstens zwei Informationen einander zuordnet;
- Senden einer ersten grafischen Darstellung (702) des ersten Berichts mit den abgerufenen aggregierten Datenobjekten über das Netz an die eine Client-Vorrichtung zur Anzeige auf einem Bildschirm der genannten einen Client-Vorrichtung;
- Empfangen (222) der Auswahl eines Benutzers von einem (706) der angezeigten aggregierten Datenobjekte über das Netz;
- Zugreifen auf ein Mapping (720), wobei das Mapping jeder zweiten Datenbanktabelle von mehreren zweiten Datenbanktabellen (326, T2, T3, T4) eine Teilmenge ({SC4, SC5, SC6}; {SC7, SC8, SC12}; {SC9, SC10}; {SC8, SC10, SC11, SC12, SC13}) von mehreren (SC4 - SC13) zweiten Auswahlkriterien zuordnet, wobei jedes zweite Auswahlkriterium die Identifizierung und das Abrufen von Daten, die in der zweiten Datenbanktabelle (326, T2, T3, T4) gespeichert sind, die in dem genannten Mapping dem genannten zweiten Auswahlkriterium zugeordnet ist, definiert;
- Abrufen detaillierter Informationen des ausgewählten aggregierten Datenobjekts durch ein Unterverfahren a); und
- Senden einer zweiten grafischen Darstellung eines weiteren Berichts zur Anzeige an die Client-Vorrichtung, wobei der weitere Bericht die genannten detaillierten Informationen aufweist;
wobei das vom Berichterstellungstelekommunikationsserver implementierte Unterverfahren a) Folgendes aufweist:
- Identifizieren (224) aller (326, T3, T4) zweiten Datenbanktabellen (326, T2, T3, T4), denen wenigstens eines der zweiten Auswahlkriterien, die dem ersten Bericht zugeordnet sind, zugeordnet ist, durch Auswertung des Mappings (720) ;
- Identifizieren aller zweiten Auswahlkriterien (SC6, SC7, SC12, SC8, SC9, SC10, SC13), die in einer der Teilmengen von zweiten Auswahlkriterien enthalten sind, die einer der identifizierten (326, T3, T4) zweiten Datenbanktabellen zugeordnet sind;
- Senden (226) der identifizierten zweiten Auswahlkriterien zu einem zweiten Bericht (324, 802), wobei der zweite Bericht ein Datenobjekt ist, das zur Auswahl jedweder Informationen, die durch gesendete zweite Auswahlkriterien (SC4 - SC13) identifiziert werden, aus irgendeiner der zweiten Datenbanktabellen (326, T2, T3, T4) konfiguriert ist; und
- Abrufen (232) von Informationen (808.1), die durch die gesendeten zweiten Auswahlkriterien (SC6, SC7, SC12, SC8, SC9, SC10, SC13) identifiziert werden, aus den identifizierten (326, T3, T4) zweiten Datenbanktabellen;
- Ergänzen des zweiten Berichts durch die genannten abgerufenen Informationen (808.1) und
- Verwenden der genannten abgerufenen Informationen als die detaillierten Informationen und Verwenden des genannten zweiten Berichts als den weiteren Bericht.

2. Berichterstellungsverfahren nach Anspruch 1, wobei der Berichterstellungstelekommunikationsserver ferner ein Unterverfahren b) implementiert, wobei das Berichterstellungsverfahren ferner Folgendes aufweist:
- Empfangen, durch den Berichterstellungstelekommunikationsserver, von Vorrichtungstypinformationen der Client-Vorrichtung;
- Verwenden, durch den Berichterstellungstelekommunikationsserver, der abgerufenen Vorrichtungstypinformationen zum automatischen Bestimmen, ob das Abrufen der detaillierten Informationen des ausgewählten aggregierten Datenobjekts vom Unterverfahren a) oder vom Unterverfahren b) ausgeführt werden soll,
wobei das vom Berichterstellungstelekommunikationsserver implementierte Unterverfahren b) Folgendes aufweist:
- Bereitstellen mehrerer (820, 822, 324) zweiter Berichte;
- Bereitstellen eines weiteren Mappings (821), wobei das weitere Mapping jeden der zweiten Berichte einem oder mehr der mehreren zweiten Auswahlkriterien (SC4 - SC13) zuordnet, wobei jeder zweite Bericht zum Auswählen jedweder Informationen, die durch die eine oder mehr zweiten Auswahlkriterien identifiziert werden, die dem genannten zweiten Bericht zugeordnet sind, aus einer oder mehr der zweiten Datenbanktabellen (326, T2, T3, T4) konfiguriert ist;
- Auswerten des weiteren Mappings (821) zum Identifizieren aller zweiten Berichte (822), denen wenigstens eines der zweiten Auswahlkriterien (SC7, SC8, SC12) zugeordnet ist, die dem ersten Bericht zugeordnet sind;
- Senden einer Liste aller identifizierten zweiten Berichte an die Client-Vorrichtung;
- Empfangen der Auswahl des Benutzers von einem (822) der zweiten Berichte der genannten Liste;
- Identifizieren von einer oder mehr zweiten Datenbanktabellen, denen wenigstens eines der zweiten Auswahlkriterien zugeordnet ist, die dem ausgewählten zweiten Bericht zugeodnet sind, durch Auswerten des Mappings (720);
- Abrufen (323) von Informationen (808.2, 808.3), die durch die zweiten Auswahlkriterien (SC8, SC9, SC10, SC12) identifiziert werden, die dem genannten ausgewählten zweiten Bericht zugeordnet sind, aus den genannten identifizierten einen oder mehr zweiten Datenbanktabellen;
- Ergänzen des ausgewählten zweiten Berichts durch die genannten abgerufenen Informationen und
- Verwenden der genannten abgerufenen Informationen als die detaillierten Informationen und Verwenden des genannten zweiten Berichts als den weiteren Bericht.

3. Berichterstellungsverfahren nach Anspruch 2, das ferner Folgendes aufweist:
- Bestimmen, durch den Berichterstellungstelekommunikationsserver, ob die Vorrichtungstypinformationen angeben, dass die Anzeigegröße der Client-Vorrichtung, die die Anforderung gesendet hat, unter einem Größenschwellenwert ist;
- Durchführen der Ausführung des Unterverfahrens b), wenn die Anzeigegröße unter dem Schwellenwert ist;
- ansonsten Durchführen der Ausführung des Unterverfahrens a).

4. Berichterstellungsverfahren nach einem der vorhergehenden Ansprüche, wobei die wenigstens eine erste Datenbanktabelle zu einer ersten Datenbank (930) gehört und die zweiten Datenbanktabellen zu einer zweiten Datenbank (932) gehören, wobei die zweite Datenbank von der ersten Datenbank separat ist.

5. Berichterstellungsverfahren nach einem der vorhergehenden Ansprüche, wobei wenigstens eines der zweiten Auswahlkriterien (SC4 - SC13) ein Identifikator für eine Spalte (C4 - C13) von einer der zweiten Datenbanktabellen (326, T2, T3, T4) ist, die dem genannten wenigstens einen zweiten Auswahlkriterium in dem Mapping (720) zugeordnet ist.

6. Berichterstellungsverfahren nach Anspruch 5, wobei wenigstens jede der Spalten (C4 - C13), die durch eines der zweiten Auswahlkriterien der mehreren zweiten Auswahlkriterien (SC4 - SC13) identifiziert wird, einen Index aufweist, der zum Auswählen (232) der in der genannten Spalte enthaltenen Informationen verwendet wird.

7. Berichterstellungsverfahren nach Anspruch 5 oder 6, wobei alle Spalten aller Tabellen eines Datenbankmanagementsystems, das die zweiten Datenbanktabellen (326, T2, T3, T4) aufweist, jeweils einen Index aufweisen, der zum Auswählen (232) der in der genannten Spalte enthaltenen Informationen verwendet wird.

8. Berichterstellungsverfahren nach einem der vorhergehenden Ansprüche, wobei ein Anwendungsprogramm (922) das Berichterstellungsverfahren nach einem der vorhergehenden Ansprüche implementiert, wobei die zweiten Datenbanktabellen von einem Datenbankmanagementsystem verwaltet werden, wobei das Verfahren ferner Folgendes aufweist:
- bei Einsatzzeit des Anwendungsprogramms Bereitstellen des Mappings (720), wobei das Mapping für jede Spalte und für jede Tabelle, die in dem genannten Datenbankmanagementsystem enthalten sind, ein zweites Auswahlkriterium aufweist, das zum Identifizieren der genannten Spalte ausgeführt ist.

9. Berichterstellungsverfahren nach einem der vorhergehenden Ansprüche, das ferner bei Ausführung von in dem zweiten Bericht enthaltener Programmlogik (804.1 - 804.3) das automatische Erstellen von Datenbankoperationen zum Verbinden der mehreren zweiten Datenbanktabellen zum Abrufen der detaillierten Informationen aufweist, wobei die Datenbankoperationen die zweiten Auswahlkriterien aufweisen.

10. Berichterstellungsverfahren nach einem der vorhergehenden Ansprüche, wobei die gesendete erste grafische Darstellung erste individualisierende GUI-Elemente aufweist, wobei die ersten individualisierenden GUI-Elemente einen Benutzer befähigen, die Zuordnung der zweiten Auswahlkriterien (SC7, SC8, SC12) zu dem ersten Bericht zu modifizieren, wobei die Modifikation die Zuordnung zusätzlicher zweiten Auswahlkriterien (SC4 - SC6, SC9 - SC11, SC13) beinhaltet, die in dem Mapping (720) enthalten sind und aktuell dem genannten ersten Bericht nicht zugeordnet sind.

11. Berichterstellungsverfahren nach Anspruch 10, das ferner Folgendes aufweist:
- Auswerten, durch den Berichterstellungstelekommunikationsserver, des Mappings (720) und der zweiten Auswahlkriterien (SC7, SC8, SC12), die aktuell dem ersten Bericht zugeordnet sind, zum Identifizieren der zweiten Auswahlkriterien (SC4 - SC6, SC9 - SC11, SC13), die in dem Mapping (720) enthalten sind und dem genannten ersten Bericht aktuell nicht zugeordnet sind;
- Senden einer grafischen Darstellung der genannten identifizierten zweiten Auswahlkriterien zum Anzeigen zur Client-Vorrichtung;
- Empfangen der Auswahl des Benutzers von den einen oder mehr genannten angezeigten zweiten Auswahlkriterien durch den Berichterstellungstelekommunikationsserver;
- Zuordnen der genannten vom Benutzer ausgewählten zweiten Auswahlkriterien zu dem ersten Bericht durch den Berichterstellungstelekommunikationsserver und
- automatisches Wiederholen des Verfahrens nach einem der vorhergehenden Ansprüche.

12. Berichterstellungsverfahren nach einem der vorhergehenden Ansprüche, wobei alle zweiten Datenbanktabellen in einer zweiten Datenbank enthalten sind, wobei das Verfahren ferner Folgendes aufweist:
- automatisches Identifizieren aller Spalten aller in der genannten zweiten Datenbank enthaltenen zweiten Datenbanktabellen, die von einem der mehreren zweiten Auswahlkriterien (SC4 - SC13) identifiziert werden und dehnen ein Index fehlt;
- automatisches Erstellen eines Indexes für jede der genannten identifizierten Spalten.

13. Berichterstellungsverfahren nach einem der vorhergehenden Ansprüche, wobei jede der Teilmengen von zweiten Auswahlkriterien eine Vielzahl von zweiten Auswahlkriterien aufweist und/oder wobei dem ersten Bericht eine Vielzahl zweiter Auswahlkriterien zugeordnet ist und wobei das Identifizieren der einen oder mehr zweiten Datenbanktabellen das Identifizieren einer Vielzahl zweiter Datenbanktabellen aufweist.

14. Telekommunikationssystem (600), das einen Berichterstellungstelekommunikationsserver (920) aufweist, der über ein Netzwerk (924) mit einer Vielzahl von Client-Vorrichtungen (910 - 916) verbunden ist, wobei der Berichterstellungstelekommunikationsserver Folgendes aufweist:
- Speicher (604);
- einen Rechnerprozessor (602, 917), der mit dem Speicher gekoppelt ist; und
- Anweisungen (624), die in dem Speicher gespeichert und durch den Prozessor ausführbar sind, wobei die Anweisungen bei Ausführung durch den Prozessor den Prozessor zum Ausführen der Schritte nach einem der Ansprüche 1 bis 13 veranlassen.

15. Nichtflüchtiges Speichermedium (915), das Anweisungen aufweist, die bei Ausführung durch einen Prozessor (602, 917) den Prozessor zum Ausführen der Schritte nach einem der Ansprüche 1 bis 13 veranlassen.

## Revendications

1. Procédé de signalement pour un réseau (924) de télécommunication multi-clients, le réseau comprenant une pluralité de dispositifs clients (910,912,914,916) et un serveur (920) de télécommunication de signalement, le procédé de signalement étant mis en oeuvre par le serveur de télécommunication de signalement et comprenant :
- la réception d'une demande en provenance de l'un (916) des dispositifs clients ;
- la création d'un premier rapport (110, 701), le premier rapport étant un objet de données ayant attribué un ou plusieurs critères d'une première sélection (SC2, SC3), et un ou plusieurs critères (SC7, SC8, SC12) d'une pluralité de critères d'une seconde sélection (SC4 à SC13), le premier rapport comprenant des objets de données agrégées (704 à 710) extraits à partir d'au moins une table d'une première base de données (306, 718, T1.A, T1.B, T1.C) en utilisant les critères de la première sélection, au moyen de laquelle la table de base de données attribue au moins deux éléments d'information à chacun d'entre eux ;
- l'envoi d'une première représentation graphique (702) du premier rapport avec les objets de données agrégées extraits à un dispositif client via le réseau pour être affichée sur un écran dudit un dispositif client ;
- la réception (222) d'une sélection par l'utilisateur de l'un (706) des objets de données agrégées affichés via le réseau ;
- l'accès à une mise en correspondance (720), la mise en correspondance attribuant à chaque seconde table de données d'une pluralité des tables de la seconde base de données (326, T2, T3, T4) un sous-ensemble {{SC4, SC5, SC6} ; {SC7, SC8, SC12} ; {SC9, SC10} {SC8, SC10, SC11, SC12, SC13}} provenant de la pluralité (SC4 à SC13) des critères de la seconde sélection, chacun des critères de la seconde sélection définissant l'identification et l'extraction des données stockées dans la seconde table de base de données (326, T2, T3, T4) attribuée dans ladite mise en correspondance audit critère de la seconde sélection ;
- l'extraction de l'information détaillée de l'objet de données agrégées choisi par un sous-procédé a) ; et
- l'envoi d'une seconde représentation graphique d'un rapport ultérieur pour être affiché sur le dispositif client, où le rapport ultérieur comprend ladite information détaillée ;
où un sous-procédé a) mis en oeuvre par le serveur de télécommunication de signalement comprend :
- l'identification (224), par l'évaluation de la mise en correspondance (720), de toutes (326, T3, T4) les tables de la seconde base de données (326, T2, T3, T4) ayant attribué au moins l'un des critères de la seconde sélection attribué au premier rapport ;
- l'identification, par évaluation ultérieure de la mise en correspondance (720), de tous les critères de la seconde sélection (SC6, SC7, SC12, SC8, SC9, SC10, SC13) contenus dans un quelconque parmi les sous-ensembles des critères de la seconde sélection attribué à l'une quelconque des tables de la seconde base de données identifiée (326, T3, T4) ;
- l'envoi (228) des critères identifiés de la seconde sélection vers un second rapport (324, 802), le second rapport étant un objet de données configuré pour choisir une information quelconque identifiée par un critère quelconque de la seconde sélection envoyé (SC4 à SC13) à partir d'une quelconque parmi les tables de la seconde base de données (326, T2, T3, T4) ; et
- l'extraction (232) de l'information (808.1) identifiée par les critères de la seconde sélection envoyés (SC6, SC7, SC12, SC8, SC9, SC10, SC13) à partir des tables identifiées de la seconde base de données (326, T3, T4) ;
- l'enrichissement du second rapport par ladite information extraite (808.1); et
- l'utilisation de ladite information extraite en tant qu'information détaillée et l'utilisation dudit second rapport en tant que rapport ultérieur.

2. Procédé de signalement selon la revendication 1, dans lequel le serveur de télécommunication de signalement met en outre en oeuvre un sous-procédé b), le procédé de signalement comprenant en outre :
- le serveur de télécommunication de signalement qui reçoit l'information sur le type du dispositif du dispositif client ;
- le serveur de télécommunication de signalement qui utilise l'information du type du dispositif extraite pour déterminer automatiquement si l'extraction de l'information détaillée de l'objet de données agrégées choisi sera exécuté par le sous-procédé a) ou par le sous-procédé b),
où le sous-procédé b) mis en oeuvre par le serveur de télécommunication de signalement comprend :
- la mise à disposition d'une pluralité (820, 822, 324) de seconds rapports ;
- la mise à disposition d'une mise en correspondance ultérieure (821), la mise en correspondance ultérieure attribuant chacun des seconds rapports à chacun ou à plusieurs critères de la pluralité des critères de la seconde sélection (SC4 à SC13), chacun des seconds rapports étant configuré pour choisir une quelconque information identifiée par un ou par plusieurs critères de la seconde sélection attribués audit second rapport à partir de l'une ou de plusieurs tables de la seconde base de données (326, T2, T3, T4) ;
- l'évaluation de la mise en correspondance ultérieure (821) pour identifier tous les seconds rapports (822) ayant attribué au moins l'un des critères de la seconde sélection (SC7, SC8, SC12) attribué au premier rapport ;
- l'envoi d'une liste de tous les seconds rapports identifiés vers le dispositif client ;
- la réception du choix de l'utilisateur de l'un (822) parmi les seconds rapports de ladite liste ;
- l'identification, par l'évaluation de la mise en correspondance (720), de l'une ou de plusieurs tables de la seconde base de données attribuées à au moins l'un des critères de la seconde sélection attribuée au second rapport choisi ;
- l'extraction (232) de l'information (808.2, 808.3) identifiée par les critères de la seconde sélection (SC8, SC9, SC10, SC12) attribués audit second rapport choisi à partir de ladite (desdites) une ou plusieurs tables de la seconde base de données ;
- la mise ne oeuvre du second rapport choisi avec ladite information extraite ; et
- l'utilisation de ladite information extraite en tant qu'information détaillée et l'utilisation dudit second rapport choisi en tant que rapport ultérieur.

3. Procédé de signalement selon la revendication 2, comprenant en outre :
- le serveur de télécommunication de signalement qui détermine si l'information du type du dispositif indique que la taille de l'affichage du dispositif client qui a envoyé la demande est inférieure à une taille limite ;
- dans le cas où la taille de l'affichage est en dessous de ce seuil, la réalisation de l'exécution du sous-procédé b) ;
- dans le cas contraire, la réalisation de l'exécution du sous-procédé a).

4. Procédé de signalement selon l'une quelconque des revendications précédentes, dans lequel l'au moins une table de la première base de données appartient à une première base de données (930) et les tables de la seconde base de données appartiennent à une seconde base de données (932), la seconde base de données étant séparée de la première base de données.

5. Procédé de signalement selon l'une quelconque des revendications précédentes, dans lequel au moins l'un des critères de la seconde sélection (SC4 à SC13) est un identifiant d'une colonne (C4 à C13) de l'une des tables de la seconde base de données (326, T2, T3, T4) qui est attribuée audit au moins un critère de la seconde sélection dans la mise en correspondance (720).

6. Procédé de signalement selon la revendication 5, dans lequel au moins chacune des colonnes (C4 à C13) qui est identifiée par l'un quelconque parmi les critères de la seconde sélection de la pluralité des critères de la seconde sélection (SC4 à SC13) comprend un index qui est utilisé pour choisir (232) l'information contenue dans ladite colonne.

7. Procédé de signalement selon les revendications 5 ou 6, dans lequel toutes les colonnes de toutes les tables d'un système de gestion de base de données comprenant les tables de la seconde base de données (326, T2, T3, T4) comprennent respectivement un index qui est utilisé pour choisir (232) l'information contenue dans ladite colonne.

8. Procédé de signalement selon l'une quelconque des revendications précédentes, dans lequel un programme d'application (922) met en oeuvre le procédé de signalement selon l'une quelconque des revendications précédentes, où les tables de la seconde base de données sont gérées par un système de gestion de base de données, le procédé comprenant en outre :
- au moment du déploiement du programme d'application, la mise à disposition de la mise en correspondance (720), où la mise en correspondance comprend, pour chacune des colonnes et pour chacune des tables contenues dans ledit système de gestion de base de données, un second critère de sélection adapté pour identifier ladite colonne.

9. Procédé de signalement selon l'une quelconque des revendications précédentes, comprenant en outre la création de manière automatique, après l'exécution de la logique du programme (804.1 à 804.3) contenue dans le second rapport, des opérations de base de données pour associer les multiples tables de la seconde base de données pour extraire l'information détaillée, les opérations de base de données comprenant les critères de la seconde sélection.

10. Procédé de signalement selon l'une quelconque des revendications précédentes, dans lequel la première représentation graphique envoyée comprend les premiers éléments GUI de personnalisation, les premiers éléments GUI de personnalisation autorisant un utilisateur à modifier l'attribution des critères de la seconde sélection (SC7, SC8, SC12) dans le premier rapport, la modification incluant l'attribution de critères additionnels de la seconde sélection (SC4 à SC6, SC9 à SC11, SC13) qui sont contenus dans la mise en correspondance (720) et qui ne sont pas présentement attribués audit premier rapport.

11. Procédé de signalement selon la revendication 10, comprenant en outre :
- le serveur de télécommunication de signalement évaluant la mise en correspondance (720) et les critères de la seconde sélection (SC7, SC8, SC12) présentement attribués au premier rapport pour l'identification des critères de la seconde sélection (SC4 à SC6, SC9 à SC11 SC13) qui sont contenus dans la mise en correspondance (720) et qui ne sont pas présentement attribués audit premier rapport ;
- l'envoi de la représentation graphique desdits critères identifiés de la seconde sélection vers le dispositif client ;
- le serveur de télécommunication de signalement recevant la sélection de l'utilisateur d'un ou de plusieurs desdits critères affichés de la seconde sélection ;
- le serveur de télécommunication de signalement qui attribue lesdits critères de la seconde sélection choisis par l'utilisateur au premier rapport ; et
- la répétition de manière automatique du procédé selon l'une quelconque des revendications précédentes.

12. Procédé de signalement selon l'une quelconque des revendications précédentes, dans lequel toutes les tables de la seconde base de données sont contenues dans la seconde base de données, le procédé comprenant en outre :
- l'identification de manière automatique de toutes les colonnes de toutes les tables de la seconde base de données contenues dans ladite seconde base de données qui sont identifiées par l'un parmi la pluralité des critères de la seconde sélection (SC4 à SC13) et auquel il manque un index ;
- la création de manière automatique d'un index pour chacune desdites colonnes identifiées.

13. Procédé de signalement selon l'une quelconque des revendications précédentes, dans lequel chacun des sous-ensembles des critères de la seconde sélection comprend des critères multiples de la seconde sélection et/ou où le premier rapport a attribué des critères multiples de la seconde sélection et où l'identification de l'une ou de plusieurs tables de la seconde base de données comprend l'identification des tables multiples de la seconde base de données.

14. Système de télécommunication (600) comprenant un serveur de télécommunication de signalement (920) connecté via un réseau (924) à des dispositifs client multiples (910 à 916), le serveur de télécommunication de signalement comprenant :
- une mémoire (604) ;
- un processeur d'ordinateur (602, 917) couplé avec la mémoire ; et
- des instructions (624) stockées dans la mémoire et exécutables par le processeur, les instructions, lorsqu'elles sont exécutées par le processeur, amènent le processeur à exécuter les étapes selon l'une quelconque des revendications 1 à 13.

15. Support de stockage non transitoire (915) comprenant des instructions qui, lorsqu'elles sont exécutées par un processeur (602, 917), amènent le processeur à exécuter les étapes selon l'une quelconque des revendications 1 à 13.
